# EUROPEAN PATENT APPLICATION

(11) **EP 1 498 891 A1**
(43) Date of publication of application: **19.01.2005**
(21) Application number: 03725631.0
(22) Date of filing: 22.04.2003
(51) Int. Cl.: G11B 11/105, G11B 7/24

(54) **OPTICAL RECORDING MEDIUM, MAGNETOOPTIC RECORDING MEDIUM, INFORMATION RECORDING/REPRODUCING DEVICE, INFORMATION RECORDING/REPRODUCING METHOD AND MAGNETIC RECORDING DEVICE**

(30) Priority: 22.04.2002 WO PCT/JP02/04021
(71) Applicant: FUJITSU LIMITED, Kawasaki-shi, Kanagawa 211-8588 (JP)
(72) Inventor: KAMIRURA, Takuya, Kawasaki-shi, Kanagawa 211-8588 (JP); TANAKA, Tsutomu, Kawasaki-shi, Kanagawa 211-8588 (JP); MATSUMOTO, Koji, Kawasaki-shi, Kanagawa 211-8588 (JP)
(74) Representative: Seeger, Wolfgang, Dipl.-Phys.
(86) International application number: PCT/JP2003/005128
(87) International publication number: WO 2003/090222

(57) **Abstract**

An optical recording medium and a magneto-optical recording medium having a laminated structure composed of a reflecting layer, a seed base layer, a seed layer and a recording layer which are formed in this order on a substrate having parallel surfaces made of polycarbonate or the like, in which the surface of the seed layer formed between the reflecting layer and recording layer has minute irregularities including seeds (projections) with a minute particle size.

## Description

### BACKGROUND OF THE INVENTION

The present invention relates to an optical recording medium, a magneto-optical recording medium, an information recording/reading- out apparatus, a method for recording/reading-out information, and a magnetic recording apparatus.

Many of practically used conventional optical recording media and magneto-optical recording media comprise a substrate with a thickness of about 1.0 mm on which a protecting layer, a recording layer and a reflecting layer (radiating layer), for example, are stacked, and recording/readout of information is performed by irradiating a light beam from a substrate side on which these stacked films are not present. Such an illumination method through a substrate is referred to as a conventional method for the sake of convenience. One example of a magneto-optical recording medium adopting the conventional method is disclosed in Japanese Patent Application Laid-Open No. 2000-82245, for example.

Moreover, as one of means for realizing high-density optical recording media and magneto-optical recording media, the spot size of a light beam to be irradiated on a recording film is decreased. In general, the relationship ϕ = λ /2NA is established, wherein ϕ is the spot size, NA is the numerical aperture of an objective lens, and λ is the wavelength of the light beam (laser light). In other words, in order to reduce the spot size ϕ, it is advantageous to increase the numerical aperture NA of the objective lens if the wavelength λ is constant.

However, the larger the numerical aperture NA, the shorter the focal length, and the greater the aberration if there are irregularities in the substrate thickness and an inclination of the substrate, and therefore it is necessary to make the substrate as thin as possible.

Hence, in order to realize high-density optical recording media and magneto-optical recording media, it is preferable to perform recording/readout by irradiating a light beam from a side on which the stacked films such as a recording layer are formed. A method in which a light beam is irradiated from a side on which the stacked films such as a recording layer are formed is hereinafter referred to as a front illumination method for the sake of convenience.

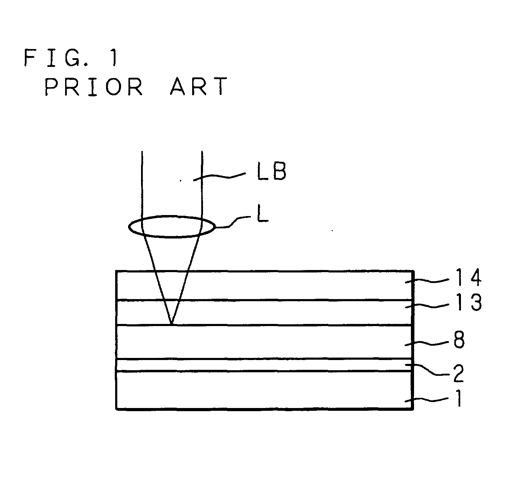

FIG. 1 is a schematic view showing the laminated structure of a conventional front illumination type magneto-optical recording medium. Although the laminated structure of FIG. 1 shows a cross section, parallel oblique lines illustrating the cross section are omitted for the reason of facilitating understanding and easy viewing (parallel oblique lines are also omitted for the laminated structure in the respective figures mentioned below). A magneto-optical recording medium has a laminated structure in which a reflecting layer 2, a recording layer 8, a protecting layer 13, and a coating layer 14 are formed in this order on a substrate 1. This laminated structure corresponds to the front illumination method, and a light beam (laser light) LB for recording/readout is irradiated from the outside of the coating layer 14 through an objective lens L toward the coating layer 14 and recording layer 8.

The substrate 1 is made of polycarbonate or the like, and has parallel surfaces. The reflecting layer 2 is usually made of a metal film or an alloy film such as silver and aluminum, and reflects the incident light beam LB toward the incident side. Since the reflecting layer 2 needs to perform a radiating function, the film thickness of the reflecting layer 2 is usually about 50 nm or more.

For recording/readout using such a magneto-optical recording medium, it is necessary to form a small recording mark to achieve high-density recording/readout. In order to form a small recording mark, the recording layer 8 needs to have a fine particle structure and surface structure. However, the recording layer 8 is in contact with the reflecting layer 2 and protecting layer 13 having many surface irregularities and is affected by the irregularities, and therefore the recording layer 8 has a very rough particle structure and surface structure. As a result, the recording mark has an irregular shape and causes a problem such as deterioration of signal quality.

This is a problem common to both the magneto-optical recording media and phase transition (phase-change) optical recording media.

Moreover, in a magneto-optical recording medium, if the saturation magnetization Ms of the recording layer 8 is large, the action of a demagnetizing field possessed by the recording layer 8 itself is increased, and consequently there arises a problem that recording is performed even in a state in which an external magnetic field is not applied and a state in which a magnetic field in an erasing direction is applied. Recording with a magnetic field in an erasing direction is not preferred because a large recording magnetic field is required when performing magnetic field modulation recording.

Further, there is a problem of a shift of the mark (recording mark) during recording due to the influence of the demagnetizing field of the recording layer 8. In particular, an effective increase in the recording magnetic field for a mark immediately after a long mark (which is caused by the application of the magnetic field of a magnetic head to the demagnetizing field of the recording layer 8) tends to cause a shift of the mark and worsened jitter in random patterns. In addition, by forming a recording assist layer, it is possible to reduce the demagnetizing field of the recording layer and decrease the recording magnetic field, but there is a problem of a decrease in the coercive force of the recording layer due to the action of the recording assist layer. A decrease in the coercive force is not preferable because a minute mark can not be held in a stable manner. As a document disclosing a technique relating to the recording assist layer, there is Japanese Patent Application Laid-Open No. H11-126384.

### BRIEF SUMMARY OF THE INVENTION

The present invention has been made with the aim of solving the above problems, and it is an object of the present invention to provide a recording layer with fine structures (fine particle structure, fine surface structure) by forming a seed layer as the base of the recording layer. Another object is to make it possible to form a small recording mark and provide an optical recording medium capable of realizing high-density recording/readout by forming a recording layer having fine particle structure and surface structure.

Still another object of the present invention is to provide a magneto-optical recording medium capable of increasing the coercive force of a recording layer and realizing high-density recording/readout even when a recording assist layer is provided.

Yet another object of the present invention is to provide an information recording/reading-out apparatus, an information recording/reading-out method and a magnetic recording apparatus using the above-mentioned optical recording medium or magneto-optical recording medium.

An optical recording medium according to a first aspect of the invention is an optical recording medium, comprising a reflecting layer and a recording layer formed in this order on a substrate, wherein information is recorded/read-out by irradiation of light from the recording layer side, and comprises a seed layer having surface irregularities between the reflecting layer and the recording layer.

An optical recording medium according to a second aspect of the invention is based on the first aspect, wherein the seed layer is made of a material containing at least one element selected from the group consisting of W, Mo, Ta, Fe, Co, Ni, Cr, Pt, Ti, P, Au, Cu, Al, Ag, Si, Gd, Tb, Nd, and Pd.

An optical recording medium according to a third aspect of the invention is based on the first aspect or second aspect, wherein the seed layer has a surface roughness of 0.3 nm to 1.5 nm.

An optical recording medium according to a fourth aspect of the invention is based on the first or second aspect, comprising a plurality of the seed layers formed, and the seed layer formed near the recording layer side has a greater surface tension than a surface tension of the seed layer formed near the reflecting layer side.

An optical recording medium according to a fifth aspect of the invention is based on the first or second aspect, wherein the recording layer shows a phase transition between a crystalline state and an amorphous state, and has a difference in reflectance between the crystalline state and the amorphous state.

In the optical recording media of the first through fifth aspects of the invention, since the seed layer is formed as the base of the recording layer, it is possible to realize a recording layer with fine structures (fine particle structure and fine surface structure). Moreover, by forming a recording layer having fine particle structure and surface structure, it is possible to form a small recording mark, that is, it is possible to provide an optical recording medium capable of achieving high-density recording/readout.

A magneto-optical recording medium according to a sixth aspect of the invention is a magneto-optical recording medium, comprising a reflecting layer and a recording layer with perpendicular magnetic anisotropy formed in this order on a substrate, wherein information is recorded/read-out by irradiation of light from the recording layer side, and comprises a seed layer having surface irregularities formed between the reflecting layer and the recording layer.

A magneto-optical recording medium according to a seventh aspect of the invention is based on the sixth aspect, wherein the seed layer is made of a material containing at least one element selected from the group consisting of W, Mo, Ta, Fe, Co, Ni, Cr, Pt, Ti, P, Au, Cu, Al, Ag, Si, Gd, Tb, Nd, and Pd.

A magneto-optical recording medium according to an eighth aspect of the invention is based on the sixth or seventh aspect, wherein the seed layer has a surface roughness of 0.3 nm to 1.5 nm.

A magneto-optical recording medium according to a ninth aspect of the invention is based on the sixth or seventh aspect, comprising a plurality of the seed layers formed, and the seed layer formed near the recording layer side has a greater surface tension than a surface tension of the seed layer formed near the reflecting layer side.

In the optical recording media of the sixth through ninth aspects of the invention, since the seed layer is formed as the base of the recording layer, it is possible to realize a recording layer with fine structures (fine particle structure and fine surface structure). Moreover, by forming a recording layer having fine particle structure and surface structure, it is possible to form a small recording mark, that is, it is possible to provide a magneto-optical recording medium capable of achieving high-density recording/readout.

A magneto-optical recording medium according to a tenth aspect of the invention is based on the sixth or seventh aspect, comprising a recording assist layer with perpendicular magnetic anisotropy formed between the reflecting layer and the seed layer wherein the recording assist layer cancels a demagnetizing field caused by magnetization of the recording layer.

A magneto-optical recording medium according to an eleventh aspect of the invention is based on the tenth aspect, wherein, when the recording layer is a transition-metal magnetization dominant magnetic film, the recording assist layer is a rare-earth magnetization dominant magnetic film.

A magneto-optical recording medium according to a twelfth aspect of the invention is based on the tenth aspect, wherein, when the recording layer is a rare-earth magnetization dominant magnetic film, the recording assist layer is a transition-metal magnetization dominant magnetic film.

A magneto-optical recording medium according to a thirteenth aspect of the invention is based on the tenth aspect, wherein, when the recording layer and the recording assist layer are transition-metal magnetization dominant magnetic films, a Curie temperature of the recording assist layer is higher than a Curie temperature of the recording layer.

A magneto-optical recording medium according to a fourteenth aspect of the invention is based on the tenth aspect, wherein, when the recording layer and the recording assist layer are rare-earth magnetization dominant magnetic films, a Curie temperature of the recording assist layer is higher than a Curie temperature of the recording layer.

An object of the magneto-optical recording media of the tenth through fourteenth aspects of the invention is to provide a magneto-optical recording medium capable of increasing the coercive force of the recording layer and achieving high-density recording/readout even when the recording assist layer is provided.

An information recording/reading-out apparatus according to a fifteenth aspect of the invention performs recording/readout of information using an optical recording medium of the first or second aspect of the invention, or a magneto-optical recording medium of the sixth or seventh aspect of the invention.

In the information recording/reading-out apparatus of the fifteenth aspect, since recording/readout of information is performed using either a high-density optical recording medium or a high-density magneto-optical recording medium, it is possible to perform recording/readout on a high-density recording medium.

In the information recording/reading-out method and apparatus of the sixteenth and seventeenth aspects of the invention, information is magneto-optically recorded by applying light and a magnetic field to a magnetic recording medium comprising a thermal diffusion layer and a recording layer with perpendicular magnetic anisotropy formed in this order on a substrate, and a seed layer having surface irregularities formed between the thermal diffusion layer and the recording layer, and information is magnetically read-out by detecting magnetic flux from the recording layer side.

In the information recording/reading-out method of the sixteenth and seventeenth aspects of the invention, since recording/readout of information is performed using a high-density magnetic recording medium, it is possible to perform recording/readout on a high-density recording medium.

According to an eighteenth aspect of the invention, a device for heating by application of light, a device for applying a magnetic field, and a device for detecting magnetic flux are mounted on one slider.

The above and further objects and features of the invention will more fully be apparent from the following detailed description with accompanying drawings.

### BRIEF DESCRIPTION OF THE SEVERAL VIEWS OF THE DRAWINGS

FIG. 1 is a schematic view showing the laminated structure of a conventional front illumination type magneto-optical recording medium; FIG. 2 is a schematic view showing an outline of the laminated structure of a magneto-optical recording medium of the present invention; FIG. 3(a) and FIG. 3(b) are schematic views showing the surface configuration of a reflecting layer; FIG. 4 is a schematic view showing the laminated structure of a magneto-optical recording medium (medium A) according to the first embodiment of the present invention; FIG. 5 is a schematic view showing the laminated structure of a conventional magneto-optical recording medium (medium C); FIG. 6 is a graph showing the Hw-CNR characteristics of the media A, B and C; FIG. 7 is a table for comparing the characteristics of the media A, B and C; FIG. 8 is a graph showing the mark length ― jitter characteristics of the media A and C; FIG. 9(a) and 9(b) are schematic views showing the relationship between the surface tension and the surface configuration of the laminated structure; FIG. 10 is a table showing the surface tension of elements, etc.; FIG. 11 is a table showing the characteristics such as surface tension, surface roughness, surface particle size interval and recording layer coercive force in association with seed layer materials; FIG. 12 is a table showing the characteristics when a seed layer is stacked; FIG. 13 is a schematic view showing the laminated structure of a magneto-optical recording medium (medium E) prepared by excluding the recording assist layer from the medium D; FIG. 14 is a graph showing the Hw ― CNR characteristics of the media D and E; FIG. 15(a) and FIG. 15(b) are schematic views explaining the function of the recording assist layer in a magneto-optical recording medium (medium F) according to the second embodiment of the present invention; FIG. 16 is a schematic view explaining the function of the recording assist layer in a magneto-optical recording medium (medium G) according to the second embodiment of the present invention; FIG. 17 is a graph showing the mark length-jitter characteristics of the media D, F and G; FIG. 18 is a schematic view showing the laminated structure of a RAD type magneto-optical recording medium (medium H) according to the third embodiment of the present invention; FIG. 19 is a schematic view showing the laminated structure of a conventional RAD type magneto-optical recording medium (medium I); FIG. 20 is a table for comparing the characteristics of the media H, I and J; FIG. 21 is a schematic view showing the laminated structure of a DWDD type magneto-optical recording medium (medium K) according to the fourth embodiment of the present invention; FIG. 22 is a schematic view showing the laminated structure of a conventional DWDD type magneto-optical recording medium (medium L); FIG. 23 is a table for comparing the characteristics of the media K, L and M; FIG. 24 is a schematic view showing the laminated structure of a phase transition type optical recording medium (medium N) according to the fifth embodiment of the present invention; FIG. 25 is a table for comparing the characteristics of the media N and P; FIG. 26 is a block diagram showing an outline of an information recording/reading-out apparatus according to the sixth embodiment of the present invention; FIG. 27 is a block diagram showing an outline of a magnetic recording apparatus according to the seventh embodiment of the present invention; FIG. 28 is a view explaining changes in the coercive force and saturation magnetization of a magnetic recording medium of the present invention with temperature; FIG. 29 is a graph showing the CNR characteristics of a magnetic recording medium of the present invention against laser recording power; FIG. 30 is a view showing an integrated head used in a magnetic recording apparatus of the present invention; FIG. 31 is a graph showing the CNR characteristics of a magnetic recording medium of the present invention against a recording current; and FIG. 32 is a table showing the CNR characteristics of a magnetic recording medium of the present invention against a base layer structure.

### DETAILED DESCRIPTION OF THE INVENTION

The following description will specifically explain the present invention with reference to the drawings illustrating some embodiments thereof.

### (Schematic Laminated Structure of Recoding Medium of the Invention)

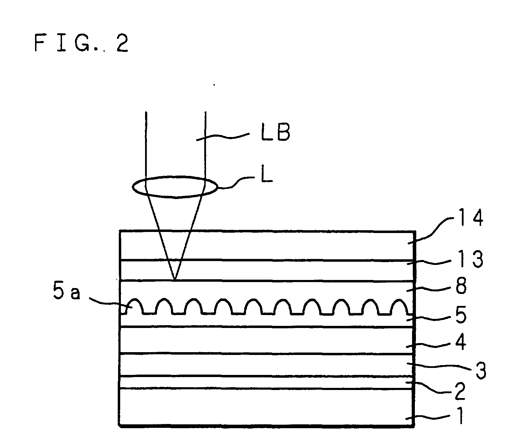

FIG. 2 is a schematic view showing an outline of the laminated structure of a magneto-optical recording medium of the present invention. Although the magneto-optical recording medium is illustrated as an example, the present invention is also applicable similarly to an optical recording medium. Note that a recording assist layer is not necessary for an optical recording medium.

The magneto-optical recording medium of the present invention has a laminated structure in which a reflecting layer 2, a recording assist layer 3, a seed base layer 4, a seed layer 5 (a first seed layer 5 if two or more seed layers are stacked), a recording layer 8, a protecting layer 13, a coating layer 14 are formed in this order on a substrate 1. Similarly to the structure shown in FIG. 1, this laminated structure corresponds to the front illumination method, and a light beam LB for recording/readout is irradiated from the outside of the coating layer 14 through an objective lens L toward the coating layer 14 and recording layer 8. The substrate 1 is similar to a conventional magneto-optical recording medium, and has parallel surfaces made of polycarbonate or the like. The recording assist layer 3 and the recording layer 8 are made of magnetic films with perpendicular magnetic anisotropy, and, for example, rare-earth magnetization is dominant in the recording assist layer 3, while transition-metal magnetization is dominant in the recording layer 8. The surface of the seed layer 5 has minute irregularities including seeds (projections) 5a of a minute particle size. The protecting layer 13 is made of a nitride film or the like, and prevents oxidation and nitriding of the recording layer 8. The coating layer 14 prevents dust and scratches.

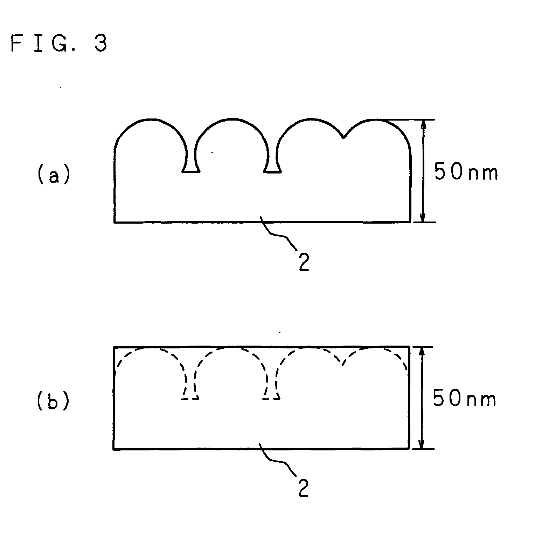

FIG. 3(a) and FIG. 3(b) are schematic views showing the configuration of a reflecting layer. In order to provide a radiation effect, the reflecting layer 2 has a film thickness of about 50 nm or more, and has a smooth surface so as to reflect the configuration of the substrate 1 under the reflecting layer 2. The surface roughness Ra of the smooth surface is preferably about 0.3 nm or less. Note that the surface roughness Ra roughly indicates the degree of surface roughness, and, in general, is indicated by the difference between the average value of the height of the raised part and the average value of the height of the depression part.

As a film deposition method of the reflecting layer 2, there is a sputtering method using a metal target. FIG. 3(a) shows a cross section of the reflecting layer 2 formed by a sputtering method using a solid target made only of Ag. Note that, like the laminated structure of FIG. 1, parallel oblique lines for showing the cross section are omitted. Since irregularities of about a half (25 nm) of the film thickness 50 nm occur, this reflecting laser 2 does not have a smooth surface.

FIG. 3(b) shows a cross section of the reflecting layer 2 formed by a sputtering method using an alloy target produced by adding predetermined amounts of Pd, Cu, Si, etc. to a metal composed mainly of Ag. With the addition of Pd, Cu, Si, etc., the surface roughness Ra can be reduced to about 0.3 nm or less for the film thickness of 50 nm. The materials added, such as Pd, limit the increase in the particle size of Ag.

As the method for smoothing the surface of the reflecting layer 2, in addition to a method in which materials such as Pd are added, there is a method in which a smooth surface is formed by etching a surface after forming a thicker Ag film. Moreover, there is also an effective method in which a dense and smooth surface is formed by decreasing the pressure in the processing room to a gas pressure of about 0.1 Pa or less and decreasing the film deposition speed during film deposition. The reflecting layer 2 smoothed in such a manner is formed on the substrate 1.

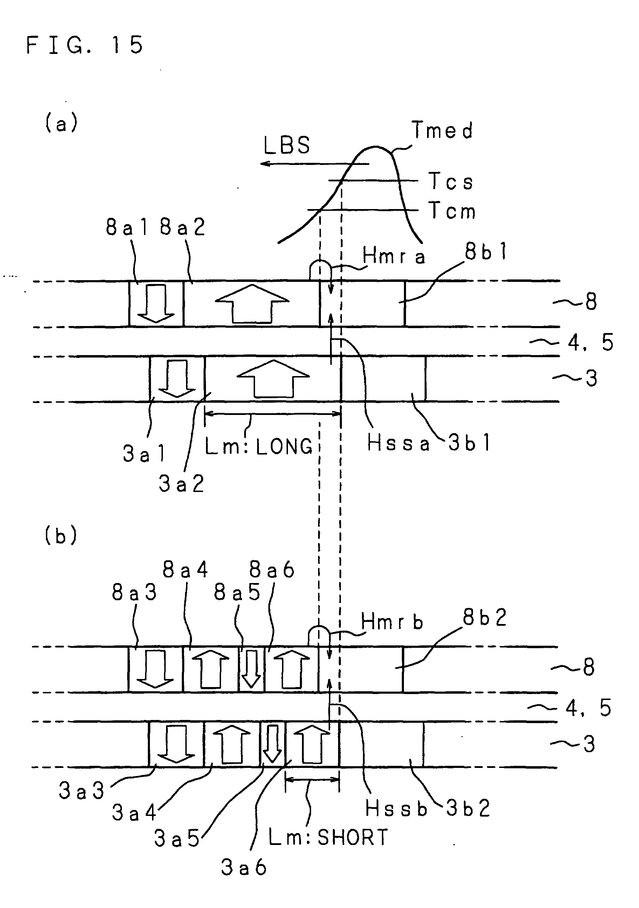

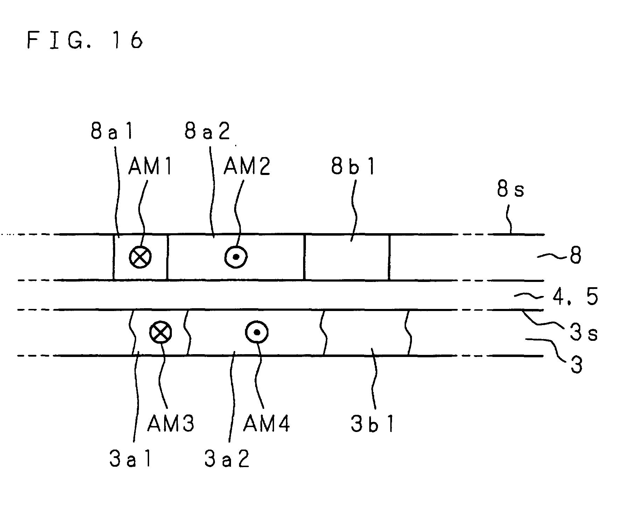

The recording assist layer 3 formed on the smooth reflecting layer 2 has magnetization acting in a direction of canceling a demagnetizing field which is caused by the recording layer 8 when a recording magnetic field is applied. In other words, the recording assist layer 3 can reduce the recording magnetic field (magnetic field necessary for recording). When the recording layer 8 is a single layer, a shift of a signal area occurs during recording in the signal area, particularly, immediately after a long mark (mark is a signal area having the same signal, and a long mark represents a state in which the signal area having the same signal continues), but it is possible to prevent the shift and improve jitter by providing a recording assist layer 3 capable of canceling the demagnetizing field (see FIG. 15 and FIG. 16).

As the recording assist layer 3, for example, a rare-earth magnetization dominant magnetic film is formed. In order to achieve uniform direction and uniform strength of magnetization of the recording layer 8 to be formed later, it is preferable to smooth the surface of the recording assist layer 3 serving as the base by depositing the film at low gas pressure. When the recording layer 8 is deposited using such a recording assist layer 3 as the base, the coercive force Hc of the recording layer 8 is decreased compared to the case where the recording layer 8 is directly deposited on the reflecting layer 2. The reason for this is that the perpendicular magnetic anisotropy of the recording layer 8 is decreased due to the influence of the recording assist layer 3 having magnetization acting in the opposite direction to the magnetization of the recording layer 8. There is the relationship d = σ/(2MsHc) between the size d of the minimum magnetic domain (usually corresponding to the length of the shortest mark) that can be held by the recording layer 8 and the coercive force Hc and saturation magnetization Ms. Note that σ is a constant determined by the material, film deposition conditions, etc.

In other words, a decrease in the coercive force Hc causes an increase in the size d of the minimum magnetic domain, and eventually causes a decrease in the recording density of the magneto-optical recording medium. Thus, in order to achieve high-density, it is necessary to decrease the size d of the minimum magnetic domain and increase the coercive force Hc.

In order to decrease the size d of the minimum magnetic domain, a seed layer 5 having surface irregularities is formed between the recording assist layer 3 and the recording layer 8. The surface of the seed layer 5 preferably has minute irregularities including seeds 5a with a minute particle size at intervals of not more than about 60 nm. With the function of the surface configuration of the seed layer 5, the recording layer 8 can be constructed by minute magnetic domains (cylindrical magnetic domains) with a uniform magnetization direction. Since the magnetization of the recording layer 8 is aligned in a uniform direction, it is possible to increase the coercive force Hc of the recording layer 8 and decrease the size d of the minimum magnetic domain. In short, it is possible to achieve high-density by forming the seed layer 5.

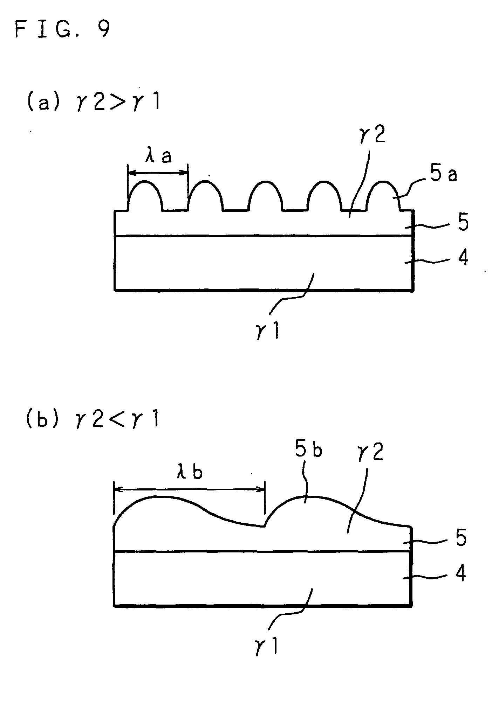

Moreover, as the base of the seed layer 5, a seed base layer 4 is formed before forming the seed layer 5. By forming a seed base layer 4 having a lower surface tension than the seed layer 5, the surface irregularities of the seed layer 5 are accurately controlled. The relationship between the surface tension of the seed base layer 4 and the surface tension of the seed layer 5 will be described in detail later (see FIG. 9).

### (First Embodiment)

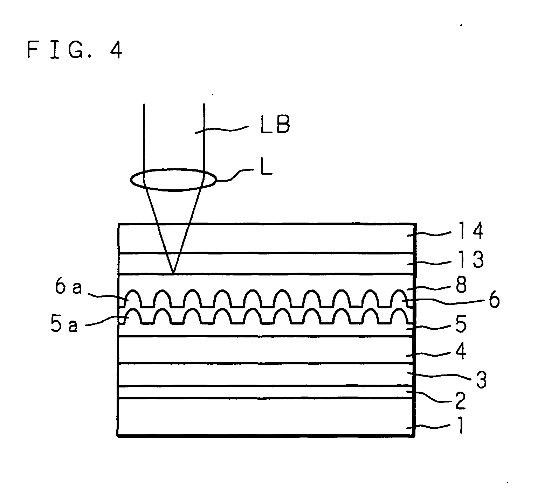

FIG. 4 is a schematic view showing the laminated structure of a magneto-optical recording medium (hereinafter referred to as the medium A) according to the first embodiment of the present invention. The medium A has a laminated structure in which a reflecting layer 2, a recording assist layer 3, a seed base layer 4, a first seed layer 5, a second seed layer 6 (seed-promotion layer 6), a recording layer 8, a protecting layer 13, and a coating layer 14 are formed in this order on a substrate 1. Seeds 5a and 6a with a minute particle size are formed on the surface of the first seed layer 5 and the surface of the second seed layer 6, respectively, thereby forming minute surface irregularities. Since this medium A corresponds to the front illumination method similarly to FIG. 2, etc, detailed explanation thereof is omitted. The present invention is also applicable to a conventional magneto-optical recording medium with a laminated structure in which the respective films are deposited in the reverse order, and information is recorded through the substrate.

The detailed structures of the respective layers of the medium A are as follows. Note that numerical values, etc. are not necessarily limited to those shown below and can be suitably changed if necessary.

Lands and grooves are formed using a photopolymer on the substrate 1 made of a glass plate with a diameter of 120 mm and a thickness of 1.2 mm. Both of the land and groove have a width of 0.25 µm. The depth of the groove is 30 nm. By performing a deep ultraviolet (DUV) radiation treatment, an extremely smooth surface configuration with a surface roughness Ra of about 0.25 nm is formed.

Reflecting layer 2: Ag, Pd, Cu, Si alloy film whose main component is Ag. 50 nm in thickness.

Recording assist layer 3: GdFeCo magnetic film. 5 nm in thickness. Since the transition-metal magnetization is dominant in the recording layer 8, the recording assist layer 3 is made of a rare-earth magnetization dominant composition, and the Curie temperature of the recording assist layer 3 is higher than that of the recording layer 8. If the recording assist layer 3 is made of a composition having perpendicular magnetization and large saturation magnetization Ms even at the Curie temperature of the recording layer 8, it has a significant effect of reducing the recording magnetic field. Here, the composition ratio is Gd 25: Fe 49: Co 26.

Seed base layer 4: SiN film. 0.5 nm in thickness.

First seed layer 5: Cr film. 0.5 nm in thickness.

Second seed layer 6: C film. 0.5 nm in thickness.

Recording layer 8: TbFeCo (Tb 19: Fe 62: Co 19) magnetic film. 25 nm in thickness.

Protecting layer 13: SiN film. 50 nm in thickness.

Coating layer 14: transparent ultraviolet curing resin. 15 µm in thickness.

The detailed film deposition conditions of the respective layers in the medium A are as follows. The conditions may vary depending on an apparatus, etc., and are not limited to those shown below and can be suitably changed if necessary.

Recording layer 2: simultaneous sputtering using an alloy target prepared by using Ag as a main component and adding Pd and Cu, and a Si target. The gas pressure is 0.95 Pa, and the supplied electric power is 500 W for the alloy target and 320 W for the Si target.

Recording assist layer 3: sputtering using a GdFeCo alloy target. The gas pressure is 0.5 Pa, and the supplied electric power is 500 W.

Seed base layer 4: sputtering using a B-doped Si target in a nitrogen gas. The gas pressure is 0.3 Pa, and the supplied electric power is 800 W.

First seed layer 5: sputtering using a Cr target. The gas pressure is 0.5 Pa, and the supplied electric power is 500 W.

Second seed layer 6: sputtering using a C target. The gas pressure is 0.5 Pa, and the supplied electric power is 500 W.

Recording layer 8: sputtering using a TbFeCo alloy target. The gas pressure is 1.0 Pa, and the supplied electric power is 500 W.

Protecting layer 13: sputtering using an A-doped Si target in a nitrogen gas. The gas pressure is 0.5 Pa, and the supplied electric power is 800 W.

Coating layer 14: after applying a transparent ultraviolet curing resin in a thickness of 15 µm by spin coating, it is cured by irradiating ultraviolet rays for about 30 seconds.

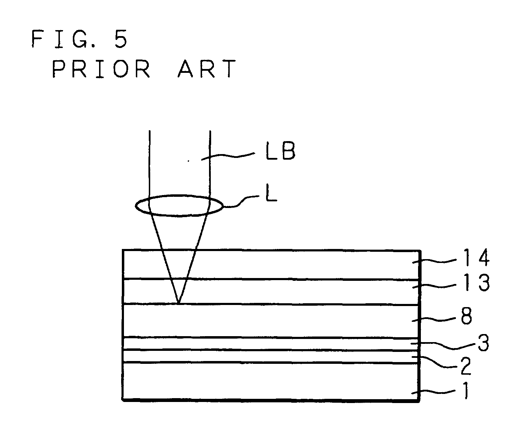

Two types of magneto-optical recording media with a conventional structure were produced to compare their characteristics with those of the medium A. One is a magneto-optical recording medium with the structure shown in FIG. 1 (hereinafter referred to as the medium B), and the other is a magneto-optical recording medium with the structure shown in FIG. 5 (hereinafter referred to as the medium C). FIG. 5 is a schematic view showing the laminated structure of the medium C. The medium B is a magneto-optical recording medium having a structure prepared by excluding the recording assist layer 3, seed base layer 4, first seed layer 5 and second seed layer 6 from the medium A. The medium C is a magneto-optical recording medium having a structure prepared by excluding the seed base layer 4, first seed layer 5 and second seed layer 6 from the medium A. The medium B and medium C are the same as the medium A in the film deposition method, film deposition conditions, and thickness.

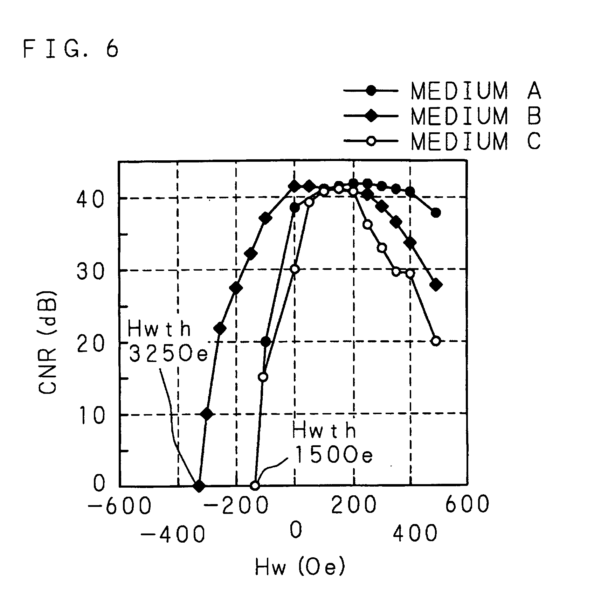

FIG. 6 is a graph showing the Hw-CNR characteristics of the media A, B and C. The horizontal axis Hw indicates the recording magnetic field (unit: Oe), and the vertical axis CNR (Carrier to Noise Ratio) indicates a signal to noise ratio (unit: dB). The rotation speed is 5.0 m/s, the mark length is 0.25 µm, the recording power (irradiation power for recording) is 9.0 mW, and the readout power (irradiation power for readout) is 3.4 mW.

It is understood by comparing the medium B and the medium C that the recording magnetic field Hw is reduced in the medium C by the effect of the recoding assist layer 3. Moreover, in a recording direction (Hw > 0), both the medium B and medium C have lower CNR and are weaker against an external magnetic field compared to the medium A. This is due to a decrease in the coercive force Hc of the recording layer 8.

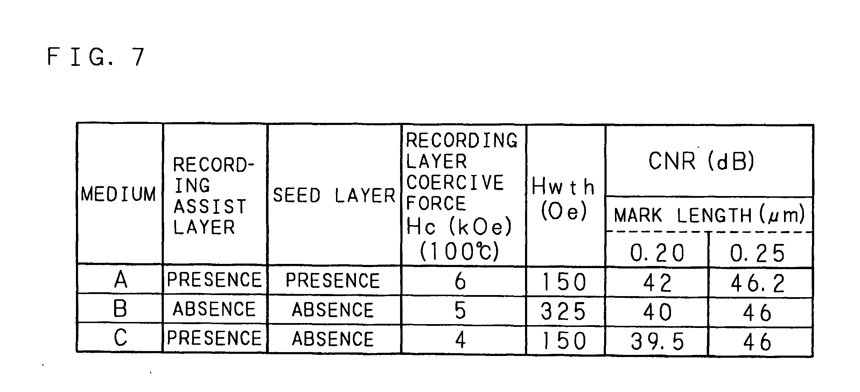

FIG. 7 is a table for comparing the characteristics of the media A, B and C. The table shows the recording layer coercive force Hc (kOe), the threshold value Hwth (Oe) of the recording magnetic field, and the CNR (dB) for the mark lengths of 0.20 µm and 0.25 µm in association with the presence or absence of the recording assist layer 3 and the presence or absence of the seed layer 5. The rotation speed is 5.0 m/s, the recording power is 9.0 mW, and the readout power is 3.4 mW. In the medium A, the recording layer coercive force is increased, and particularly the CNR is improved for a short mark length compared to the medium C. In short, it is possible to confirm that high-density was realized by the function of the seed layer 5.

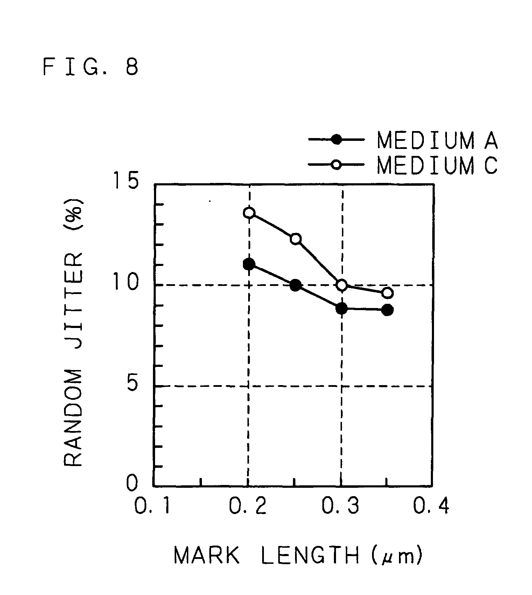

FIG. 8 is a graph showing the mark length - jitter characteristics of the media A and C. The horizontal axis indicates the mark length (unit: dB), and the vertical axis shows random jitter (unit: %). It is possible to confirm that the shift during recording was reduced, and particularly random jitter was improved for a short mark length by the function of the seed layer.

The reason for forming the seed base layer 4 as the base of the seed layer 5 is to provide a base with a surface tension lower than that of Cr used as the seed layer 5. Next, the relationship between the surface tension and the surface configuration in the laminated structure will be explained.

FIG. 9(a) and 9(b) are schematic views showing the relationship between the surface tension and the surface configuration in the laminated structure. FIG. 9(a) shows a case where the surface tension γ1 of the seed base layer 4 is lower than the surface tension γ2 of the seed layer 5. In this case, the material of the seed layer 5 aggregates and easily grows during film deposition, and the surface particle size interval λ of the seeds 5a becomes shorter as shown by λ a in FIG. 9(a). FIG. 9(b) shows a case where the surface tension γ1 of the seed base layer 4 is higher than the surface tension γ2 of the seed layer 5. In this case, the material of the seed layer 5 hardly aggregates, and the surface particle size interval λ becomes longer as shown by λ b in FIG. 9(b), and the particle size of the seeds 5b becomes larger. In short, a surface configuration in which the interval of irregularities is long is obtained.

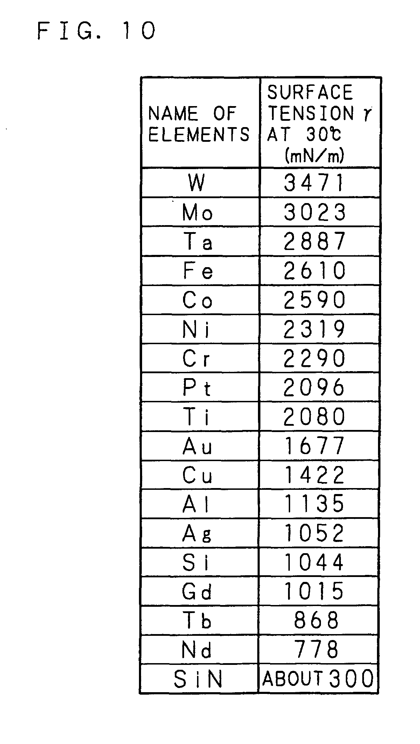

FIG. 10 is a table showing the surface tension of elements, etc. The surface tensions γ of various materials, such as elements, at 30°C are shown. In order to cause the surface configuration of the seed layer 5 to have minute irregularities as shown in FIG. 9(a), a suitable material for the seed base layer 4 is selected according to the material of the seed layer 5, with reference to the surface tensions of materials.

In the medium A, the thickness of the Cr film of the first seed layer 5 is 0.5 nm, and the thickness of the C film of the second seed layer 6 is 0.5 nm. If the thickness is 0.5 nm or more, the surface particle size interval λ of the seeds 5a is as long as or longer than 60 nm, and the surface roughness Ra of the seeds 5a is as large as or more than 1.5 nm. If the surface particle size interval λ is increased, the particle size (magnetic domain) of the recording layer 8 formed thereon becomes larger and the recoding resolution is decreased. Besides, if the surface roughness Ra is increased, the coercive force Hc of the recording layer 8 becomes higher, and there is a problem of insufficient recording magnetic field for recording. In short, the seed layer 5 has preferably a surface roughness of 0.5 nm to 1.5 nm, and a surface particle size interval λ of about 10 nm to 60 nm.

In the medium A, Cr is used as the material of the first seed layer 5, but if SiN is used as the material of the seed base layer 4, seeds 5a similar to that formed with Cr can be formed by using a material having a surface tension greater than SiN. Moreover, it is possible to change the surface roughness Ra and the recording layer coercive force Hc by changing the material of the first seed layer 5 (seed layer 5).

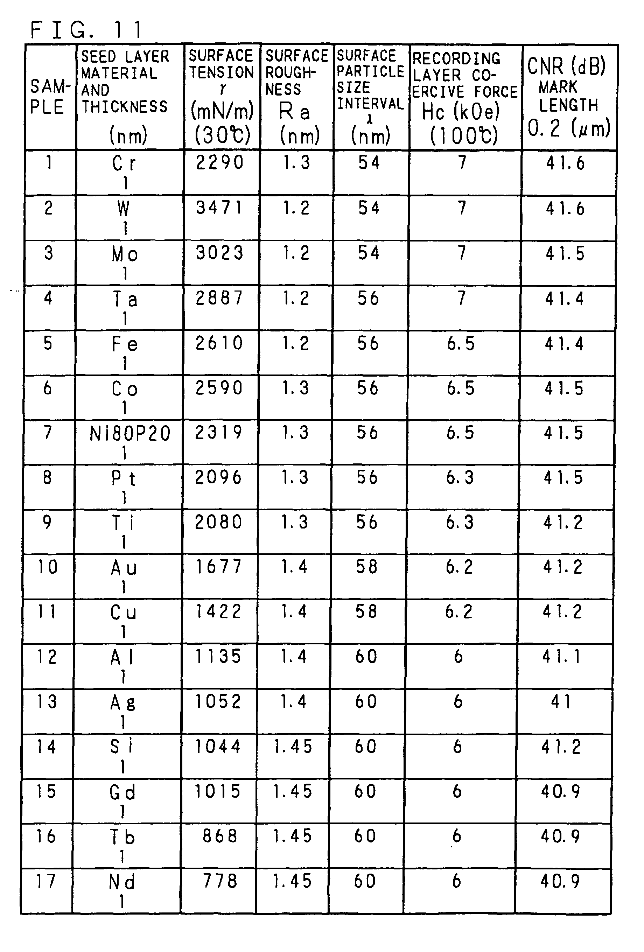

FIG. 11 is a table showing the characteristics such as a surface tension, surface roughness, surface particle size interval, and recording layer coercive force in association with seed layer materials. For example, a sample 1 shows a case where the seed layer material is Cr, the thickness of the formed film is 1 nm, the surface tension γ is 2290 mN/m at 30°C, the surface roughness Ra is 1.3 nm, the surface particle size interval λ is 54 nm, the recording layer coercive force Hc is 7 kOe at 100°C, and the CNR is 41.6 dB for a mark length of 0.2 µm.

In the medium A, even if only the first seed layer 5 (seed layer 5) is formed without forming the second seed layer 6, it is possible to obtain a higher recording layer coercive force Hc than the medium C. However, by forming the second seed layer 6, it is possible to further promote the surface roughness Ra and further increase the recording layer coercive force Hc while maintaining the surface particle size interval λ formed by the first seed layer 5.

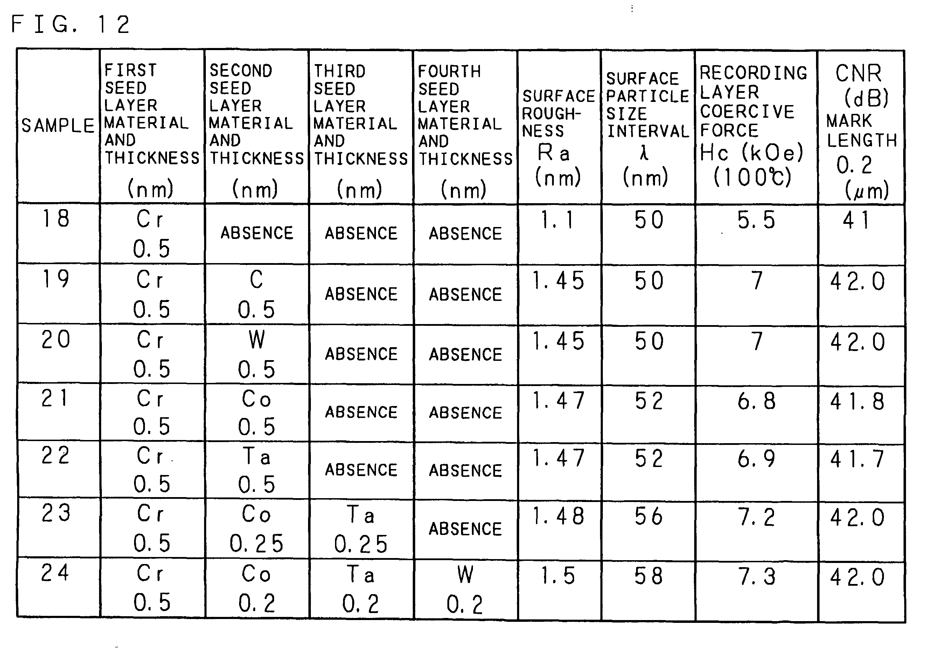

FIG. 12 is a table showing the characteristics when seed layers are stacked. For example, a sample 18 shows a case where the seed layer material is Cr, the thickness of the formed film is 0.5 nm, the surface roughness Ra is 1.1 nm, the surface particle size interval λ is 50 nm, the recording layer coercive force Hc is 5.5 kOe at 100°C, and the CNR is 41 dB for a mark length of 0.2 µm. A sample 19 uses C as the second seed layer material, but it is possible to use materials other than C. A sample 20 uses W, a sample 21 uses Co, and a sample 22 uses Ta as the second seed layer material. Thus, in the case where the seed layers are stacked, if materials are selected so that the surface tension of the upper seed layer material is higher than that of the lower seed layer material as explained in FIG. 9, the material aggregates and the seeds grow easily, and the surface particle size interval λ can be decreased to an appropriate value.

In addition, it is possible to further form a third seed layer and a fourth seed layer on the second seed layer 6, and a sample 23 shows a case where the third seed layer is formed and a sample 24 shows a case where the fourth seed layer is formed. The sample 24 shows a case where the first seed layer material is Cr, the thickness of the formed film is 0.5 nm, the second seed layer material is Co, the thickness of the formed film is 0.2 nm, the third seed layer material is Ta, the thickness of the formed film is 0.2 nm, the fourth seed layer material is W, the thickness of the formed film is 0.2 nm, the surface roughness Ra is 1.5 nm, the surface particle size interval λ is 58 nm, the recording layer coercive force Hc is 7.3 kOe at 100°C, and the CNR is 42.0 dB for a mark length of 0.2 µm.

By forming a plurality of seed layers, it is possible to change the surface roughness Ra and the surface particle size interval λ of the seed layer surface, and it is possible to further improve the recording layer coercive force Hc and CNR.

In the medium A, the recording layer 8 is a TbFeCo magnetic film of a transition-metal magnetization dominant composition, and the recording assist layer 3 is a GdFeCo magnetic film of a rare-earth magnetization dominant composition. However, when the recording layer 8 has a rare-earth magnetization dominant composition, it is possible to reduce the recording magnetic field by using a transition-metal magnetization dominant composition for the recording assist layer 3. In either case, it is preferable to use a composition so that the recording assist layer 3 has perpendicular magnetization in the vicinity of the Curie temperature Tcm of the recording layer 8.

For example, in the medium A, the composition ratio of Tb of the recording layer 8 is changed so that the recording layer 8 is a TbFeCo magnetic film of a rare-earth magnetization dominant composition, and the composition ratio of Gd of the recording assist layer 3 is changed so that the recording assist layer 3 is a GdFeCo magnetic film of a transition-metal magnetization dominant composition, and the resulting medium is denoted as a medium D. Other conditions such as the film deposition method, film deposition conditions and thickness of the medium D are the same as those of the medium A.

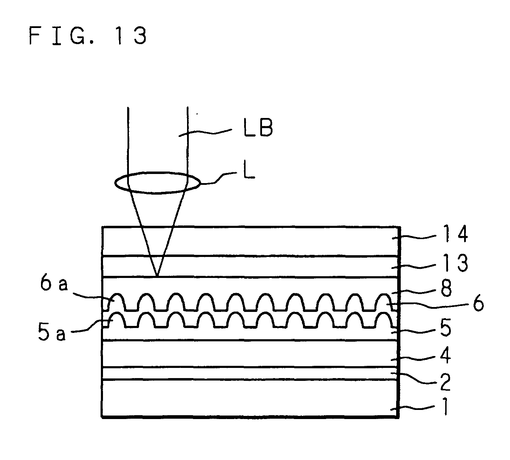

FIG. 13 is a schematic view showing the laminated structure of a magneto-optical recording medium (hereinafter referred as the medium E) prepared by excluding the recording assist layer from the medium D. The medium E is constructed by removing the recording assist layer from the laminated structure of the medium D for the purpose of comparing its characteristics with those of the medium D, and other conditions are the same as those of the medium D (medium A). Thus, the medium E has a laminated structure comprising a substrate 1, a reflecting layer 2, a seed base layer 4, a first seed layer 5, a second seed layer 6, a recording layer 8, a protecting layer 13, and a coating layer 14.

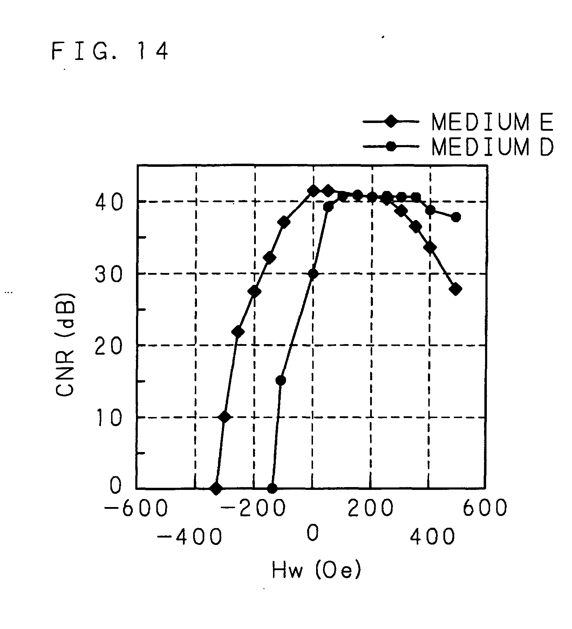

FIG. 14 is a graph showing the Hw ― CNR characteristics of the media D and E. The horizontal axis Hw indicates the recording magnetic field (unit: Oe), and the vertical axis CNR (Carrier to Noise Ratio) indicates a signal to noise ratio (unit: dB). The rotation speed is 5.0 m/s, the mark length is 0.25 µm, the recording power (irradiation power for recording) is 9.0 mW, and the readout power (irradiation power for readout) is 3.4 mW. It is shown that a combination of the recording layer 8 made of a rare-earth magnetization dominant magnetic film and the recording assist layer 3 made of a transition-metal magnetization dominant magnetic film also has the effect of reducing the recording magnetic field Hw.

### (Second Embodiment)

FIG. 15(a) and FIG. 15(b) are schematic views explaining the function of a recording assist layer in a magneto-optical recording medium (medium F) according to the second embodiment of the present invention.

FIG. 15(a) indicates a case where the mark length Lm is long, while FIG. 15(b) indicates a case where the mark length Lm is short. The relative traveling direction of a light beam (LB) is shown by an arrow LBS. The temperature distribution Tmed caused in the medium by the irradiation of the light beam is schematically shown (the temperature distribution is omitted in FIG. 15(b) because it is the same as in FIG. 15(a)). The fact that the Curie temperature Tcs of a recording assist layer 3 is higher than the Curie temperature Tcm of a recording layer 8 is illustrated over the temperature distribution Tmed. A seed base layer 4 and a seed layer 5 are formed between the recording assist layer 3 and the recording layer 8.

In the medium A, by using a transition-metal magnetization dominant magnetic film similar to the recording layer 8 as the recording assist layer 3 and increasing the Curie temperature Tcs of the recording assist layer 3 higher than the Curie temperature Tcm of the recording layer 8, it is possible to reduce the shift of the magnetic domain (mark) during recording. A medium satisfying this condition is denoted as a medium F. The structure of the medium F is basically the same as the structure of the medium A and medium D, but differs from the medium A and medium D in that a transition-metal magnetization dominant magnetic film is used as the recording assist layer 3 and the Curie temperature Tcs is higher than the Curie temperature Tcm. For example, the Curie temperature Tcs is 350°C, and the Curie temperature Tcm is 300°C. Similarly to the medium A and medium D, the recording layer 8 is made of a transition-metal magnetization dominant magnetic film. In the medium F, other conditions, such as the film deposition method, film deposition conditions and thickness, are the same as those of the medium A and medium D.

Note that, when the recording layer 8 is a rare-earth magnetization dominant magnetic film, it is also possible to reduce the shift of the magnetic domain (mark) during recording by using a rare-earth magnetization dominant magnetic film as the recording assist layer 3 and making the Curie temperature Tcs of the recording assist layer 3 higher than the Curie temperature Tcm of the recording layer 8.

In recording, when the mark length Lm is long (FIG. 15(a)), magnetization shown by the arrows is present in domains (mark boundaries) 8a1 and 8a2. In the recording assist layer 3, domains 3a1 and 3a2 corresponding to the domains 8a1 and 8a2 are present. A domain 8b1 has a temperature equal to or higher than the Curie temperature Tcm and shows a state in which magnetization disappears, and accordingly magnetization in a domain 3b 1 disappears. Note that since the Curie temperature Tcs and the Curie temperature Tcm differ, the boundaries of the respective domains in the recording layer 8 and the boundaries of the respective domains in the recording assist layer 3 shift according to the difference in the Curie temperatures.

In such a state, when recording a mark in the domain 8b1, if the recording assist layer 3 is not present, the recording magnetic field applied from a magnetic head (not shown) is canceled by a demagnetizing field Hmra, and therefore the recording magnetic field is insufficient and the position of the recording mark (domain 8b1) shifts. Here, however, since the domain 3a2 corresponding to the domain 8a2 is present, a magnetic field Hssa of the domain 3a2 acts to cancel the demagnetizing field Hmra, thereby preventing a shift of the position of the recording mark.

In recording, when the mark length Lm is short (FIG. 15(b)), magnetization shown by the arrows is present in domains (mark boundaries) 8a3, 8a4, 8a5 and 8a6 of the recording layer 8. Moreover, in the recording assist layer 3, domains 3a3, 3a4, 3a5 and 3a6 corresponding to the domains 8a3, 8a4, 8a5 and 8a6 are present. A domain 8b2 has a temperature equal to or higher than the Curie temperature Tcm and shows a state in which magnetization disappears, and accordingly magnetization in a domain 3b2 disappears.

In such a state, if the recording assist layer 3 is not present, the boundary section of the domain 8b2 is magnetized by a demagnetizing field Hmrb caused by the magnetization of the domain 8a6, and the position of the recording mark shifts. Here, however, since the domain 3a6 corresponding to the domain 8a6 is present, a magnetic field Hssb of the domain 3a6 acts to cancel the demagnetizing field Hmrb, thereby preventing a shift of the position of the recording mark.

By appropriately adjusting the difference between the Curie temperature Tcm and the Curie temperature Tcs, it is possible to produce a magnetic field Hssa corresponding to a demagnetizing field Hmra for a long mark length Lm, and produce a magnetic field Hssb corresponding to a demagnetizing field Hmrb for a short mark length Lm. In short, in both cases where the mark length is long and short, it is possible to reduce the influence of the demagnetizing field of the recording layer 8 and prevent a shift of the mark.

Note that since the recording assist layer 3 and the recording layer 8 are magnetically parted by the seed layer 5 during readout, the magnetization state of the recording assist layer 3 will never be read-out.

In the method in which the recording assist layer 3 is made of a magnetic film of a composition in which the same magnetization as the recording layer 8 is dominant and the difference between the Curie temperature Tcm and the Curie temperature Tcs is adjusted as in the medium F, it is difficult to make a fine adjustment to the magnitude of magnetization of the recording assist layer 3 for canceling the demagnetizing field of the recording layer 8.

FIG. 16 is a schematic view explaining the function of the recording assist layer in a magneto-optical recording medium (medium G) according to the second embodiment of the present invention. By decreasing the recording resolution of the recording assist layer 3, it is possible to make a fine adjustment to the magnitude of magnetization of the recording assist layer 3 for canceling the demagnetizing field of the recording layer 8. A medium with the recording assist layer 3 having decreased recording resolution is referred to as the medium G. Since the recording resolution of the recording assist layer 3 is controllable by changing the gas pressure in the film deposition conditions of the recording assist layer 3, it can be relatively easily adjusted. The medium G has the same structure as the medium F, and the gas pressure in the film deposition conditions of the recording assist layer 3 is increased to 1.5 Pa from 0.5 Pa of the medium F (medium D, medium A).

FIG. 16 shows the same state as FIG. 15(a). The recording layer 8 is the same as that of the medium F, and the boundaries of the domains 8a1, 8a2 and 8b1 are seen from a surface 8s side. Moreover, the directions of magnetization in the domain 8a1 and 8a2 of FIG. 15(a) seen from the surface 8s side are denoted as AM1 and AM2, respectively. The boundaries of the domains 3a1, 3a2 and 3b1 are seen from a surface 3s side. A vertical curve indicates deterioration of the recording resolution of the recording assist layer 3 due to intricacies of the boundaries of the respective domains. Besides, the directions of magnetization of the domain 3a1 and 3a2 of FIG. 15(a) seen from the surface 3s side are denoted as AM3 and AM4, respectively.

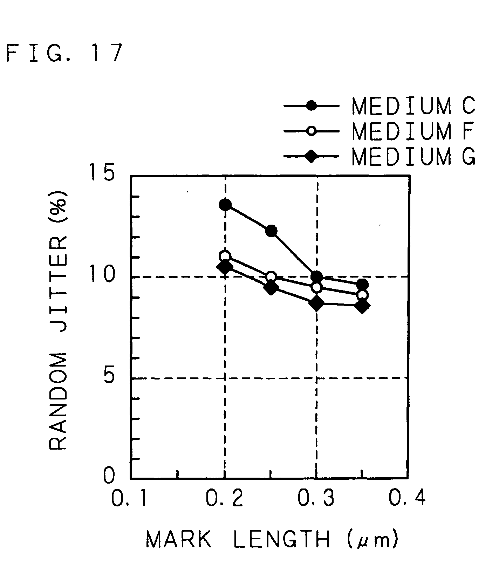

FIG. 17 is a graph showing the mark length ― jitter characteristics of the media C, F and G. The horizontal axis indicates the mark length (unit: dB), and the vertical axis shows random jitter (unit: %). Even in the medium F in which the Curie temperature Tcs of the recording assist layer 3 is higher than the Curie temperature Tcm of the recording layer 8 and the medium G in which the recording resolution of the recording assist layer 3 is decreased, random jitter for the respective mark lengths is improved by the function of the recording assist layer 3.

### (Third Embodiment)

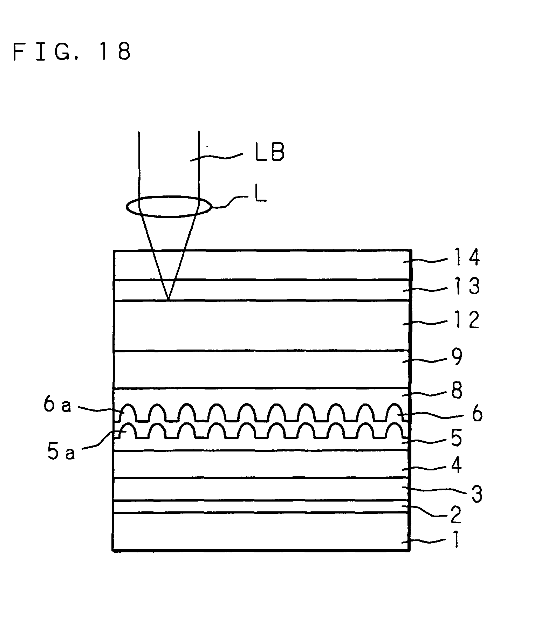

FIG. 18 is a schematic view showing the laminated structure of a RAD type magneto-optical recording medium (medium H) according to the third embodiment of the present invention. Note that RAD represents Rear Aperture Detection Resolution, and this kind of techniques is disclosed in a document, Japanese Patent Application Laid-Open No. H04-271039.

The medium H has a laminated structure in which a reflecting layer 2, a recording assist layer 3, a seed base layer 4, a first seed layer 5, a second seed layer 6, a recording layer 8, an intermediate layer 9, a reading-out layer 12, a protecting layer 13, and a coating layer 14 are formed in this order on a substrate 1. In other words, this is the structure obtained by adding the recording assist layer 3, seed base layer 4, first seed layer 5 and second seed layer 6 to a conventional RAD type magneto-optical recording medium. Since this is the structure obtained by adding the intermediate layer 9 and reading-out layer 12 to the structure of the medium A (FIG. 4) and corresponds to the front illumination method similarly to FIG. 4, etc., detailed explanation is omitted.

The structures of the respective layers in the medium H are basically the same as those of the medium A, and therefore detailed explanation is omitted. The main structures are as follows.

Recording assist layer 3: GdFeCo (Gd 25:Fe 49:Co 26) rare-earth magnetization dominant magnetic film (rare-earth magnetization is dominant because transition-metal magnetization is dominant in the recording layer 8).

Seed base layer 4: SiN film with a thickness of 0.5 nm.

First seed layer 5: Cr film with a thickness of 0.5 nm.

Second seed layer 6: C film with a thickness of 0.5 nm.

Recording layer 8: TbFeCo (Tb 22:Fe 60:Co 18) transition-metal magnetization dominant magnetic film.

Intermediate layer 9: GdFeCoSi (Gd 30:Fe 60:Co 2:Si 8) magnetic film.

Reading-out layer 12: GdFeCo (Gd 24:Fe 63:Co 13) magnetic film.

The film deposition conditions of the respective layers in the medium H are basically the same as those of the medium A, and differ in the following points. The conditions may vary depending on the apparatus, are not limited to those mentioned above, and can be suitably changed if necessary

Intermediate layer 9: Sputtering by placing a Si chip on a GdFeCo alloy target. The gas pressure is 0.54 Pa, and the supplied electric power is 500 W.

Reading-out layer 12: Sputtering using a GdFeCo alloy target. The gas pressure is 0.86 Pa, and the supplied electric power is 800 W.

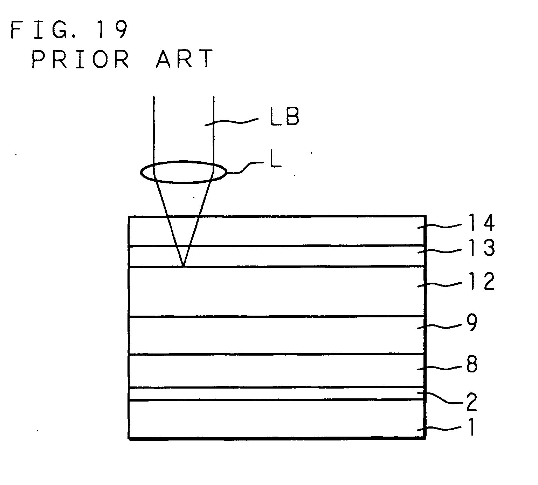

FIG. 19 is a schematic view showing the laminated structure of a conventional RAD type magneto-optical recording medium (medium I). The medium I has the structure prepared by excluding the recording assist layer 3, seed base layer 4, first seed layer 5 and second seed layer 6 from the medium H, and the film deposition conditions are the same as those of the medium H.

In the medium H, since the recording layer 8 is a transition-metal magnetization dominant magnetic film, the recording assist layer 3 is made of a rare-earth magnetization dominant magnetic film, but, even if the recording assist layer 3 is made of a transition-metal magnetization dominant magnetic film, it is also possible to provide the effect of reducing a shift of the mark in recording. The reason for this is as explained in FIG. 15. A medium in which the recording assist layer 3 is made of a transition-metal magnetization dominant magnetic film similarly to the recording layer 8 is denoted as the medium J. Note that the Curie temperature Tcs of the recording assist layer 3 is 350°C which is higher than the Curie temperature Tcm of 300°C of the recording layer 3.

In the medium H, the gas pressure in forming the recording assist layer 3 is 0.5 Pa, but, in the medium J, the gas pressure in forming the recording assist layer 3 is 1.0 Pa which is higher than that for the medium H. The gas pressure is suitably selected and determined so as to minimize random jitter. Accordingly, the resolution of the recording assist layer 3 is decreased and the shift of the recording mark is reduced as explained in FIG. 16.

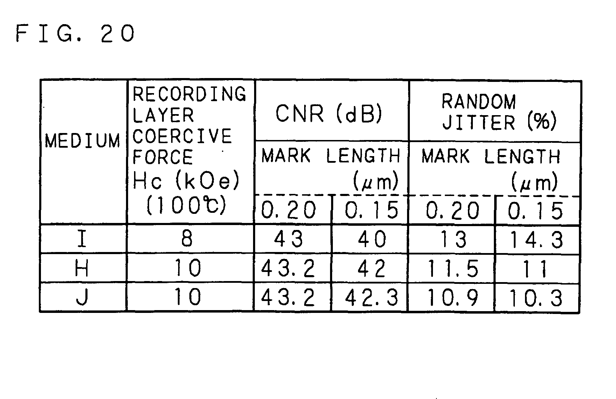

FIG. 20 is a table for comparing the characteristics of the media H, I and J. Regarding the media H, I and J, the recording layer coercive force Hc (kOe), the CNR (dB) and random jitter (%) for the mark lengths of 0.20 µm and 0.15 µm are shown. The media H and J have improved characteristics in the recording layer coercive force Hc, CNR and random jitter compared to the medium I. In other words, the recording layer coercive force Hc is increased and the CNR in recording a short mark is significantly improved by the effects of the first seed layer 5 and second seed layer 6. In addition, the recording magnetic field is reduced and random jitter for a short mark is significantly improved by the effect of the recording assist layer 3.

When the medium H and the medium J are compared, the random jitter of the medium J is further improved because the recording assist layer 3 of the medium J is changed (improved).

### (Fourth Embodiment)

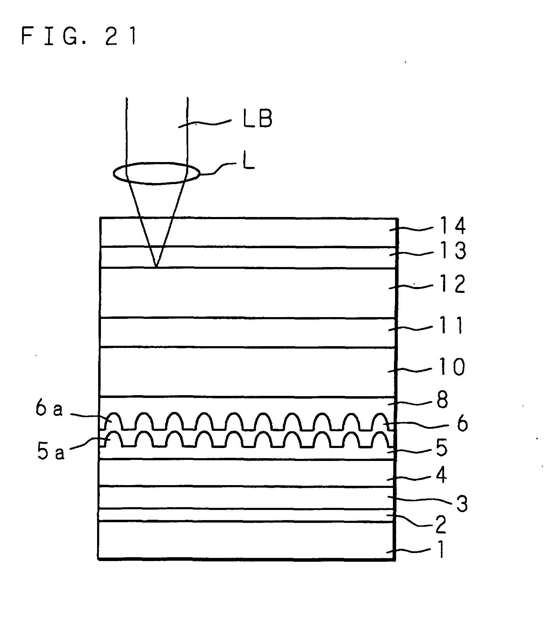

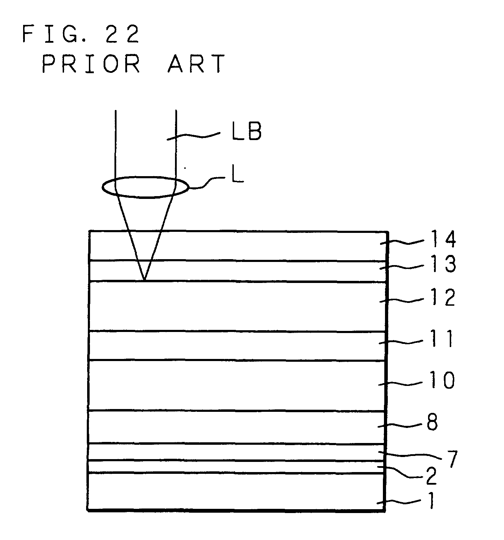

FIG. 21 is a schematic view showing the laminated structure of a DWDD type magneto-optical recording medium (medium K) according to the fourth embodiment of the present invention. FIG. 22 is a schematic view showing the laminated structure of a conventional DWDD type magneto-optical recording medium (medium L). Note that DWDD represents Domain Wall Displacement Detection, and this kind of technique is disclosed in a document, Japanese Patent Application Laid-Open No. H01-143041. The medium L is obtained by arranging a conventional DWDD medium to correspond to the front illumination method.

The medium K has a laminated structure in which a reflecting layer 2, a recording assist layer 3, a seed base layer 4, a first seed layer 5, a second seed layer 6, a recording layer 8, a switching layer 10, a controlling layer 11, a reading-out layer 12, a protecting layer 13, and a coating layer 14 are formed in this order on a substrate 1. The medium L has a laminated structure in which a reflecting layer 2, a dielectric layer 7, a recording layer 8, a switching layer 10, a controlling layer 11, a reading-out layer 12, a protecting layer 13, and a coating layer 14 are formed in this order on a substrate 1. Since the seed base layer 4 of the medium K corresponds to the dielectric layer 7 of the medium L, the structure of the medium K is obtained by adding the recording assist layer 3, first seed layer 5 and second seed layer 6 to a conventional DWDD type magneto-optical recording medium (medium L) and corresponds to the front illumination method similarly to FIG. 18, etc., and therefore detailed explanation is omitted.

The structures of the respective layers in the medium K are basically the same as those of the media A and H, and therefore the details thereof are omitted. The main structures are as follows.

Recording assist layer 3: GdFeCo (Gd 23:Fe 51:Co 26) magnetic film. Since the recording layer 8 is a rare-earth magnetization dominant magnetic film, the recording assist layer 3 is made of a transition-metal magnetization dominant magnetic film.

Seed base layer 4: SiN film with a thickness of 0.5 nm.

First seed layer 5: Cr film with a thickness of 0.5 nm.

Second seed layer 6: C film with a thickness of 0.5 nm.

Recording layer 8: TbFeCo (Tb 24:Fe 56:Co 20) magnetic film.

Switching layer 10: TbFeCo (Tb 18:Fe 80:Co 2) magnetic film.

Controlling layer 11: TbFeCo (Tb 19:Fe 74:Co 7) magnetic film.

Reading-out layer 12: GdFeCo (Gd 25:Fe 65:Co 10) magnetic film.

The film deposition conditions of the respective layers in the medium K are basically the same as those of the media A and H, and differ in the following points. The conditions may vary depending on the apparatus, are not limited to those mentioned above, and can be suitably changed if necessary.

Switching layer 10: Sputtering by placing a Co chip on a TbFe alloy target. The gas pressure is 0.5 Pa, and the supplied electric power is 500 W.

Controlling layer 11: Sputtering using a TbFeCo alloy target. The gas pressure is 0.8 Pa, and the supplied electric power is 800 W.

The film deposition conditions of the medium L are the same as those of the medium K.

In the medium L, the dielectric layer 7 is formed between the reflecting layer 2 and the recording layer 8. Since the radiation performance can be further controlled by the dielectric layer 7, a better mark is recorded. It has already been mentioned that the seed base layer 4 of the medium K adjusts the surface tension appropriately to form the seeds 5a and 6a in addition to the control of radiation performance.

In the medium K, since the recording layer 8 is a rare-earth magnetization dominant magnetic film, the recording assist layer 3 is made of a transition-metal magnetization dominant magnetic film, but, even if the recording assist layer 3 is made of a rare-earth magnetization dominant magnetic film, it is also possible to provide the effect of reducing a shift of the mark in recording. The reason for this is as explained in FIG. 15. A medium in which the recording assist layer 3 is made of a rare-earth magnetization dominant magnetic film similarly to the recording layer 8 is denoted as the medium M. Note that the Curie temperature Tcs of the recording assist layer 3 is 350°C which is higher than the Curie temperature Tcm of 300°C of the recording layer 3.

In the medium K, the gas pressure in forming the recording assist layer 3 is 0.5 Pa, but, in the medium M, the gas pressure in forming the recording assist layer 3 is 1.0 Pa which is higher than that for the medium K. Accordingly, the resolution of the recording assist layer 3 is decreased and the shift of the recording mark can be reduced as explained in FIG. 16.

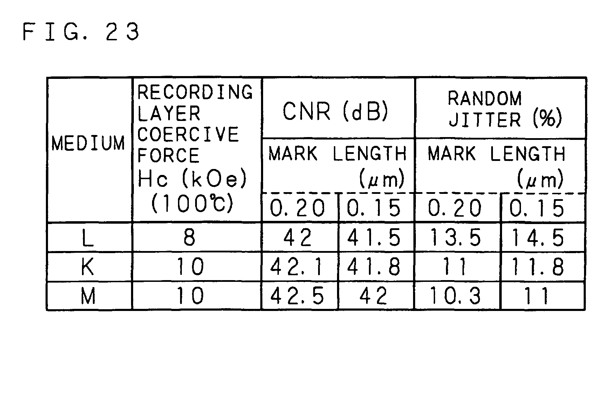

FIG. 23 is a table for comparing the characteristics of the media L, K and M. Regarding the media K, L and M, the recording layer coercive force Hc (kOe), the CNR (dB) for the mark lengths of 0.12 µm and 0.10 µm and random jitter (%) for the mark lengths of 0.15 µm and 0.10 µm are shown. The media K and M have improved characteristics in the recording layer coercive force Hc, CNR and random jitter compared to the medium L. In other words, the recording layer coercive force Hc is increased and the CNR in recording a short mark is improved by the effects of the first seed layer 5 and second seed layer 6. In addition, the recording magnetic field is reduced and random jitter for a short mark is significantly improved by the effect of the recording assist layer 3.

When the medium K and the medium M are compared, the random jitter of the medium M is further improved because the recording assist layer 3 of the medium M is changed (improved).

### (Fifth Embodiment)

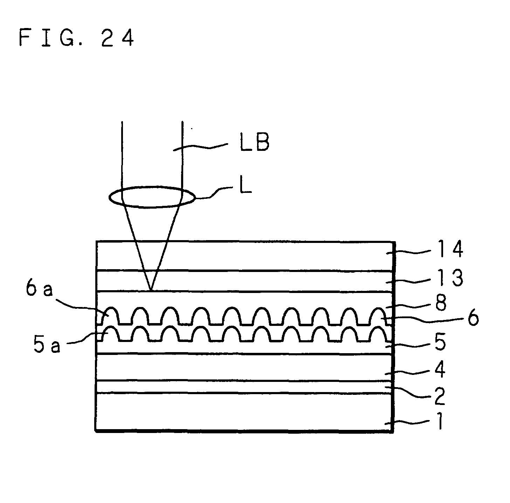

FIG. 24 is a schematic view showing the laminated structure of a phase transition type optical recording medium (medium N) according to the fifth embodiment of the present invention. Since this medium corresponds to the front illumination method similarly to FIG. 4, etc., detailed explanation is omitted. Note that the present invention is also applicable to a conventional optical recording medium with a laminated structure in which the respective films are deposited in the reverse order, and information is recorded through the substrate.

The medium N has a laminated structure in which a reflecting layer 2, a seed base layer 4, a first seed layer 5, a second seed layer 6, a recording layer 8, a protecting layer 13, and a coating layer 14 are formed in this order on a substrate 1.

The structures of the respective layers in the medium N are basically the same as those of the medium A, and differ only in terms of the recording layer 3. The structure, film deposition conditions, etc. of the recording layer 8 are as follows.

Recording layer 8: GeSbTe (Ge 70:Sb 21:Te 9) phase transition film. The phase transition film formed here is, for example, a film having a difference in the reflectance between the crystalline state and the amorphous state. The film is deposited by sputtering using an alloy target of a predetermined composition. The gas (Ar) pressure is 0.5 Pa, and the supplied electric power is 500 W.

An optical recording medium having a conventional structure (hereinafter referred to as the medium P) was produced to compare its characteristics with those of the medium N. The structure of the medium P is similar to the magneto-optical recording medium shown in FIG. 1, and the medium P has a structure prepared by excluding the seed base layer 4, first seed layer 5 and second seed layer 6 from the medium N. Like the other media, the medium P is of the front illumination type.

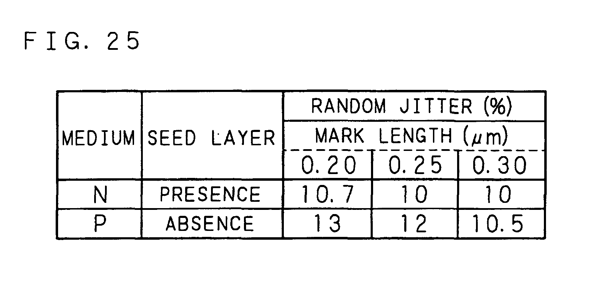

FIG. 25 is a table for comparing the characteristics of the media N and P. In the medium N, since the seed layers (first seed layer 5 and second seed layer 6) are formed, the random jitter is significantly improved, especially for a short mark length.

### (Sixth Embodiment)

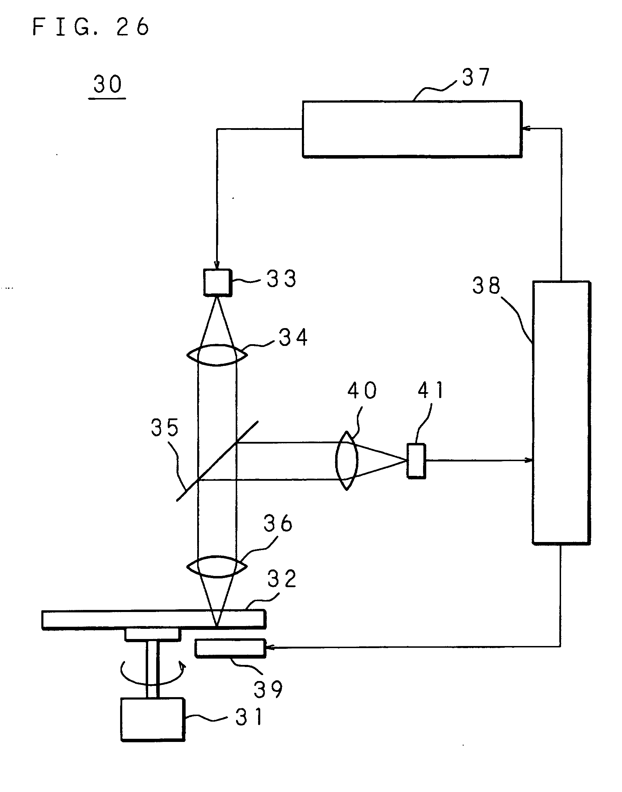

FIG. 26 is a block diagram showing an outline of an information recording/reading-out apparatus according to the sixth embodiment of the present invention. Although a magneto-optical recording/reading-out apparatus 30 is explained as an information recording/reading-out apparatus, the present invention is also applicable similarly to an optical recording/reading-out apparatus.

A magneto-optical recording medium 32 (hereinafter referred to as the medium 32) of the present invention is rotated at a predetermined rotation speed by a spindle motor 31. Laser light is irradiated from the laser diode 33 onto the medium 32. The laser light is made parallel light by a collimation lens 34, passes through a beam splitter 35, is focused by an objective lens 36, and controlled to form a focal point on a recording film of the medium 32. The laser diode 33 is adjusted to output light of high level and light of low level by pulse modulating means (not shown) in laser drive means 37.

When recording information, the laser light is modulated into pulses by the pulse modulating means according to the information to be recorded, and irradiated on the medium 32. Then, by applying a DC magnetic field having a predetermined magnitude in an upward direction in FIG. 26, for example, to the vicinity of a laser spot formed on the surface of the medium 32 by the irradiation of the laser light controlled for recording by bias magnetic field applying means 39, the information is recorded. Note that the bias magnetic field applying means 39 is controlled by a controller 38.

When erasing information, by applying a magnetic field in a downward direction in FIG. 26, for example, to the vicinity of a laser spot formed on the surface of the medium 32 by the irradiation of the laser light controlled for erasure, the information is erased.

When reading-out information, a reading-out magnetic field in the same direction as in recording is applied by driving the laser diode 33 with a direct current through the laser drive means 37 by the controller 38 and irradiating laser light. With the irradiation of the laser light controlled for readout, a temperature distribution is produced on the surface of the medium 32. With this temperature distribution, a mask region and an aperture region are formed, and reflected light is obtained from the aperture region. The optical path of the reflected light is changed by the beam splitter 35, and the reflected light is guided to a lens 40. The lens 40 condenses the reflected light and guides it to a beam detector 41. By detecting the condensed reflected light with the beam detector 41 and processing the signal by the controller 38, the recorded information can be read-out with a good CNR.

Note that, in the case of the front illumination method, the bias magnetic field applying means 39 is interposed between the medium 32 and the objective lens 36, and the laser spot is focused on the surface of the medium 32.

### (Seventh Embodiment)

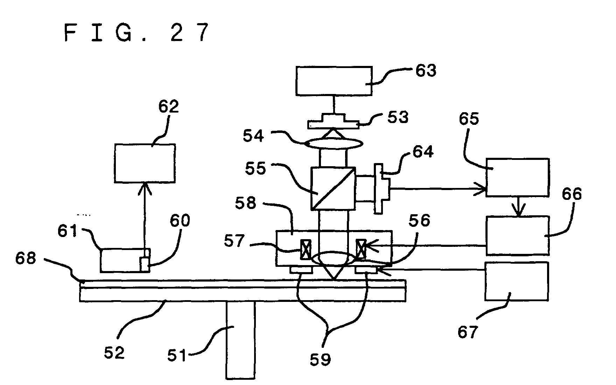

FIG. 27 is a block diagram showing an outline of a magnetic recording apparatus according to the seventh embodiment of the present invention.

A recording medium (magnetic recording medium) 52 of the present invention is rotated at a predetermined rotation speed by a spindle 51. Laser light is irradiated from a laser diode 53 onto a recording layer 68 formed on the surface of the recording medium 52. The laser light is made parallel light by a collimation lens 54, passes through a beam splitter 55, is focused by an objective lens 56 mounted on an optical head slider 58, and controlled to form a focal point on the recording layer 68. The laser diode 53 can output light of high level and light of low level pulse-modulated by a laser drive circuit 63.

When recording information, the laser light is modulated into pulses by the laser drive circuit 63 according to the information to be recorded, and irradiated on the recording layer 68. Then, by applying a DC magnetic field having a predetermined magnitude in an upward direction in FIG. 27 to the vicinity of a laser spot formed on the surface of the recording layer 68 by the irradiation of the laser light controlled for recording by a recording coil 59, it is possible to record information of the upward magnetic field, and it is possible to record information of downward magnetic field as a magnetic domain by applying a magnetic field in a downward direction. It is possible to make the recording coil 59 extremely small by placing the recording coil 59 adjacent to the recording layer 68. By making the recording coil 59 sufficiently small, it is possible to perform magnetic field modulation recording. Note that the recording coil 59 is controlled by a recording coil drive circuit 67. The optical head slider 58, recording coil 59, etc. form a magneto-optical recording unit.

Besides, the optical path of the light reflected by the recording layer is changed to the right in FIG. 27 by the beam splitter 55, converted into an electrical signal by a beam detector 64, and the focus direction of the reflected light is detected by a focus signal detector 65. A focusing coil drive circuit 66 is controlled based on the focus direction detected by the focus signal detector 65, a focus current flows in a focusing coil 57 and moves the objective lens 56 up and down in FIG. 27 so that the laser spot is controlled to be focused on the recording layer 68.

On the other hand, during readout, a change in the magnetic domain is detected (magnetic flux of the magnetic domain is detected) by a magnetic reading-out device 60 that is a device mounted on a magnetic head slider 61 and detects magnetic flux during readout, and the information recorded at high-density can be read-out with a good CNR by a reading-out device detector 62. The magnetic reading-out device 60, magnetic head slider 61, etc. form a magnetic reading-out unit.

The structure of the recording medium (magnetic recording medium) 52 according to the seventh embodiment of the present invention is as follows. A thermal diffusion layer, a seed layer (having surface irregularities on the recording layer side), a recording layer (with perpendicular anisotropy), a protecting layer, and a lubricant layer are formed on a substrate. Here, since the thermal diffusion layer adjusts heat generated by the irradiated light, it basically performs almost the same role as the reflecting layer explained in the sixth embodiment.

Next, a method of manufacturing the recording medium 52 is explained.

For the substrate, a flat glass substrate with a disk diameter of 2.5 inches was used. For the thermal diffusion layer, it is possible to use metal or alloy materials, and, here, the thermal diffusion layer has an AlSi (Al 60:Si 40) composition and a film thickness of 40 nm. A seed layer was formed on the thermal diffusion layer. The seed layer has a double-layer structure which was produced by first forming RuO in 1 nm and then forming Ag in 1 nm. The recording layer is a single-layer film which was formed by depositing TbFeCo (Tb 21:Fe 40:Co 39) in 25 nm. For the protecting layer, SiN was deposited in 3 nm, Cr was deposited in 1 nm, and C was deposited in 1 nm. These layers were formed by a typical magnetron sputtering method. For these, layers, targets made of the respective materials were used, and Ar was used as a sputtering gas. Note that RuO was formed by reactive sputtering using a Ru target and a mixed gas ofAr and oxygen (02). SiN was formed by reactive sputtering using a Si target and a mixed gas of Ar and nitrogen (N2). A lubricant was applied to the surface of the recording medium 52 thus produced. A fluororesin is used as the lubricant and applied by a spin coating method. The film thickness of the lubricant is 1 nm or less.

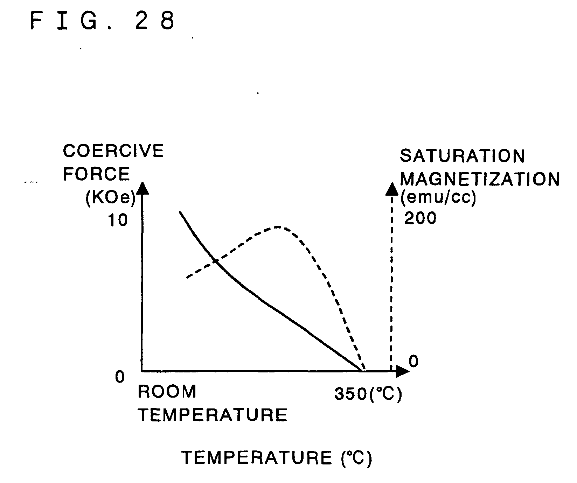

FIG. 28 shows one example of changes in the coercive force and saturation magnetization of the thus formed recording medium 52 against temperature. The coercive force is 10 kOe or more at room temperature, but decreased when heated as shown by the solid line in FIG. 28 and becomes almost 0 at about 350°C. If the recording medium 52 is heated to a temperature having a coercive force capable of performing recording by a recording magnetic field generated by the recording coil 59 mounted on the optical slider 58, recording is possible.

Besides, since the value of saturation magnetization of the recording medium 52 at room temperature is 100 emu/cc or more as shown by the dotted line in FIG. 28, it is possible to read-out the magnetic flux from the recording mark by a typical magneto-resistive device.

With reference to FIG. 27, a method for recording/reading-out information is explained. Recording is performed (a magnetic domain is recorded) by applying a magnetic field in a state in which the coercive force of the recording layer has been decreased by heating the recording medium 52 with irradiation of light. Thereafter, by detecting the leakage magnetic flux from the recorded magnetic domain, the signal is read-out.

First, in order to confirm the principle of experiments, a small air-core coil (recording coil 59) was formed on a flying slider (optical head slider 58), and light was incident from the air-core portion. Since the coercive force of the recording medium 52 is decreased by irradiating light, a magnetic field is generated by causing a current to flow in the air-core coil in such a state. The magnetic field changes the direction of magnetic flux upward or downward according to the size of a magnetic domain to be recorded. For the detection of magnetic flux, a magnetic reading-out head (magnetic head slider 61) was used. The magnetic reading-out head was obtained by attaching a magneto-resistive device (magnetic reading-out device 60) to a slider.

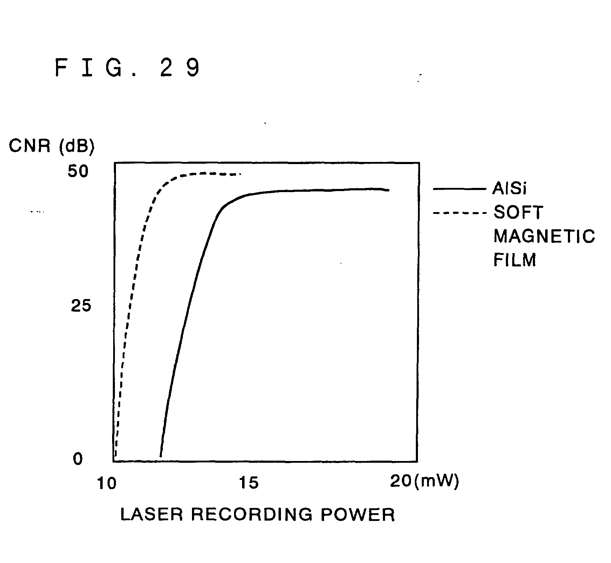

FIG. 29 shows a change in the CNR of a magnetic recording medium of the present invention against laser recording power. Here, the recording magnetic field is 400 oersted. The size of the recording mark is 50 nm. The readout core width of the magnetic reading-out head used is 0.2 µm, and the shield gap length is 0.09 µm. The wavelength of the recording laser is 405 nm, and the numerical aperture NA of the objective lens is 0.85.

As shown by the solid line of FIG. 29, by using the laser recording power of 15 mW, the readout characteristics are almost saturated. By performing magnetic readout, it is possible to read-out such a minute mark, and it is understood that the readout characteristics are significantly improved compared to readout of thermo-magnetically recorded information using light.

### (Eighth Embodiment)

In the seventh embodiment, an AlSi film was used as a thermal diffusion layer. However, a soft magnetic film may be actually used. The reason for this is that, although the heat conductivity of metal and alloy differ depending on the materials, the value is much larger compared to dielectric. Moreover, since the magnetic field of the recording coil is concentrated in the recording film by using a soft magnetic film, it is possible to obtain a large magnetic field. This example will be explained. Note that the media and measuring system are almost the same as those in the seventh embodiment.

Here, CoZrNb, FeCSi, NiFe were used as soft magnetic films, and their film thickness was 80 nm. A change in the CNR of these recording media (magnetic recording media) against the laser recording power is shown by the dotted line in FIG. 29. Since the heat conductivity of the soft magnetic material is smaller than AlSi, it is understood that recording is performed with lower power. Further, a CNR similar to that obtained by AlSi, or a slightly increased CNR, can be expected. The effect of an increase in the magnetic field largely contributes to this.

### (Ninth Embodiment)

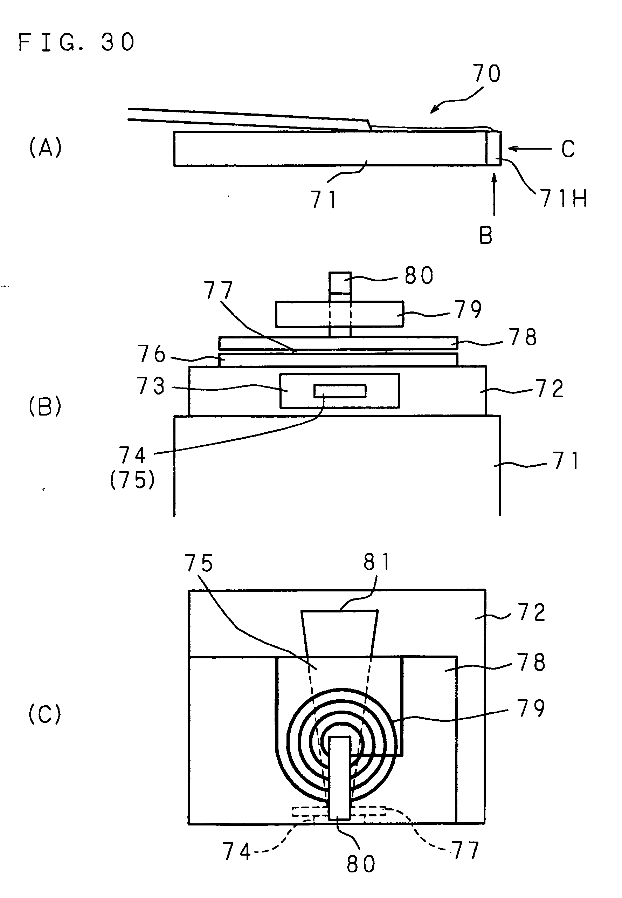

FIG. 30 is a block diagram showing an integrated head used for recording/readout in a magnetic recording apparatus of the present invention. This shows an embodiment in which an integrated head 71H produced by integrating an optical system (laser light irradiating unit: composed of beam aperture 74, a waveguide channel 75, a beam inlet 81, etc.), a recording coil 79 and magnetic reading-out device (magneto-resistive device 77) is mounted on a single slider 70. The optical system used was of a waveguide channel type. The recording coil 79 was formed behind the beam aperture 74 from which light to be irradiated on a recording medium (magnetic recording medium) is emitted. The reason for this is that, if the recording medium is rotated at high speed, the point at which the temperature is actually raised shifts to the rear side of the spot position. The magneto-resistive device 77 for detecting magnetic flux was formed between the beam aperture 74 and the recording coil 79.

FIG. 30(A) shows a state in which the integrated head 71H is mounted on an end of the sliding base plate 71 constituting the slider 70.

FIG. 30(B) is a view seen from the direction of arrow B of FIG. 30(A). In other words, FIG. 30(B) is a view seen from the slider surface (surface facing the recording medium). For the sliding base plate 71, AlTiC was used. The sliding base plate 71 shows a state cut out from one piece of wafer. A part of a flattening layer 72 for use as the base was formed on the surface of the sliding base plate 71. Thereafter, Au used for a beam shielding portion 73 was vapor deposited. This film thickness is 100 nm. Using a photolithography technique (a process using a resist and etching), patterns are formed on the lower surface of the beam shielding portion 73. A portion corresponding to the beam aperture 74 and other unnecessary portions were masked with a resist, and Au was vapor deposited on the lower surface. Thereafter, the resist was removed by a liftoff method, etc., and the beam aperture 74 and the beam shielding portion 73 were formed. The size of the beam aperture 74 thus formed is 100 nm in width and 60 nm in height, and the beam shielding portion 73 has a thickness of 50 nm for the waveguide channel 75.

The flattening layer 72 was formed by forming alumina on the beam shielding portion 73 by a sputtering method and polishing the alumina to make a smooth surface. After forming a permalloy (first shielding layer 76) in the thickness of 200 nm on the flattening layer 72, the magneto-resistive device 77 as a device for detecting magnetic flux was formed while performing patterning using the photolithography technique. FeCo (second shielding layer 78) was formed in a thickness of 200 nm on the magneto-resistive device 77. Further, a 1-µm resist was formed, and the recording coil 79 and recording magnetic pole 80 were formed on the resist. The size of the recording magnetic pole 80 was 100 nm in width and 50 nm in height. The recording coil 79 and recording magnetic pole 80 form a device for applying a magnetic field to the recording medium.

FIG. 30(C) is a view seen from the direction of arrow C of FIG. 30(A). In other words, FIG. 30(C) is a side view of the integrated head 71H. The recording coil 79 which is hardly illustrated in FIG. 30(B) is shown. Here, the second shielding layer 78 and the recording magnetic pole 80 are connected by FeCo in the vertical direction (the vertical direction in FIG. 30(B) and the direction from the front to rear in the paper surface of FIG. 30(C)), and there is no gap in the magnetic channel. Note that the beam inlet 81 guides laser light from the outside of the slider 70 through an optical fiber or the like, and can irradiate (apply) light to the recording medium from the beam aperture 74.

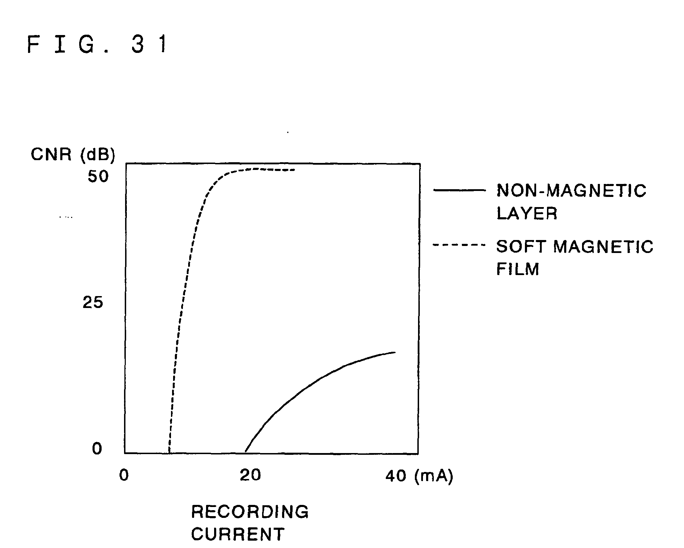

The recording/reading-out characteristics were examined using the integrated head 71H thus produced experimentally FIG. 31 is a graph showing the CNR characteristics of a magnetic recording medium of the present invention against a recording current. The measured mark length is 50 nm. Here, as the recording medium (magnetic recording medium), one using a soft magnetic film for the thermal diffusion layer is used. With the use of a soft magnetic film, a magnetic field for a magnetic domain to be recorded is increased because the magnetic flux from the recording magnetic pole (80) returns to the second shielding layer (78) through the soft magnetic film.

According to the above-mentioned structure, it is possible to perform recording even with low laser recording power. A recording current Iw (current flowing in the recording coil) in recording was 20 mA. Moreover, a sense current Is flowing in the magneto-resistive device (77) was 3 mA. These values are almost equal to the values used for ordinary magnetic recording.

The solid line of FIG. 31 shows the CNR characteristics when a non-magnetic layer was used for the thermal diffusion layer, while the dotted line indicates the CNR characteristics when a soft-magnetic film was used for the thermal diffusion layer. It is apparent from FIG. 31 that, when a soft magnetic film is used for the thermal diffusion layer, higher CNR characteristics are obtained with a lower recording current.

### (Tenth Embodiment)

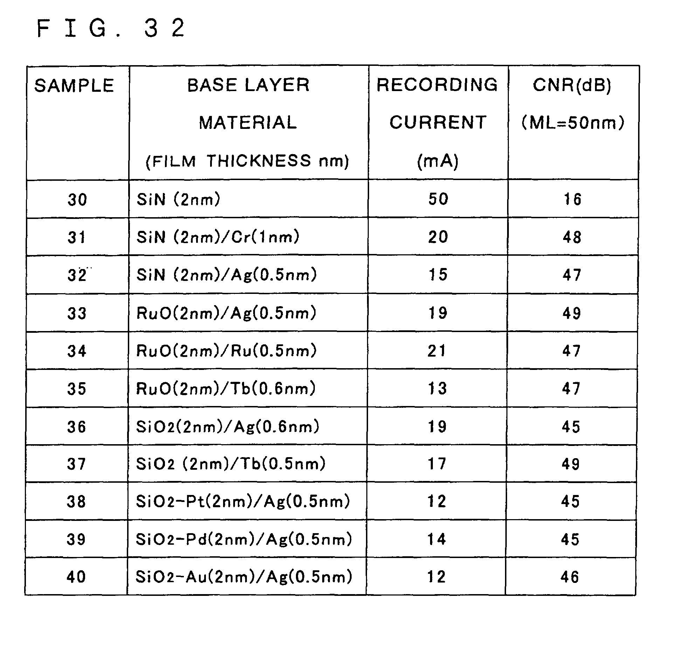

FIG. 32 is a table showing the CNR characteristics of a magnetic recording medium used in the present invention against the base layer structure. Here, in order to confirm the effect of the base layer (seed layer), recording media (magnetic recording media) were produced by changing the base layer in various ways, and their characteristics were evaluated. The basic production method is the same as that mentioned above, but samples with the following structures were produced.

Substrate / thermal diffusion layer (soft magnetic film: 100 nm) / base layer (seed layer) / recording layer (20 nm) / protecting layer (5 nm)

For the recording layer, TbFeCo (Tb 19:Fe 50:Co 31) was used. For the base layer, one using only SiN, one using an example of the materials recited in the claims as characteristics of the present invention, etc. were examined. These are shown as samples 30 to 40 in FIG. 32.

As a head for recording/readout, the integrated head of the ninth embodiment was used. For the evaluation of recording/readout, the CNR for a mark length (ML) of 50 nm was examined. FIG. 32 shows the results of the evaluation. Note that in a base layer material with a double-layer structure, the left side is a layer close to the thermal diffusion layer. It can be understood from the results that it is advantageous to use a seed layer for the base layer. Note that the recording current is a current flowing in the recording coil.

The optical recording medium and magneto-optical recording medium of the present invention have excellent random jitter characteristics and CNR and can decrease the recording magnetic field, and thus it is possible to provide an information recording medium capable of achieving high-density.

The information recording/reading-out apparatus, information recording/reading-out method and magnetic recording apparatus of the present invention can provide an information recording/reading-out apparatus capable of performing recording/readout on a high-density information recording medium.

As this invention may be embodied in several forms without departing from the spirit of essential characteristics thereof, the present embodiments are therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. An optical recording medium, comprising a reflecting layer and a recording layer formed in this order on a substrate,
wherein information is recorded/read-out by irradiation of light from said recording layer side, **characterized by** comprising a seed layer having surface irregularities formed between said reflecting layer and said recording layer.

2. The optical recording medium as set forth in claim 1, **characterized in that** said seed layer is made of a material containing at least one element selected from the group consisting of W, Mo, Ta, Fe, Co, Ni, Cr, Pt, Ti, P, Au, Cu, Al, Ag, Si, Gd, Tb, Nd, and Pd.

3. The optical recording medium as set forth in claim 1 or 2, **characterized in that** said seed layer has a surface roughness of 0.3 nm to 1.5 nm.

4. The optical recording medium as set forth in claim 1 or 2, **characterized by** comprising a plurality of said seed layers formed,
wherein the seed layer formed near the recording layer side has a greater surface tension than a surface tension of the seed layer formed near the reflecting layer side.

5. The optical recording medium as set forth in claim 1 or 2, **characterized in that** said recording layer shows a phase transition between a crystalline state and an amorphous state, and has a difference in reflectance between the crystalline state and the amorphous state.

6. A magneto-optical recording medium, comprising a reflecting layer and a recording layer with perpendicular magnetic anisotropy formed in this order on a substrate,
wherein information is recorded/read-out by irradiation of light from said recording layer side, **characterized by** comprising a seed layer having surface irregularities formed between said reflecting layer and said recording layer.

7. The magneto-optical recording medium as set forth in claim 6, **characterized in that** said seed layer is made of a material containing at least one element selected from the group consisting of W, Mo, Ta, Fe, Co, Ni, Cr, Pt, Ti, P, Au, Cu, Al, Ag, Si, Gd, Tb, Nd, and Pd.

8. The magneto-optical recording medium as set forth in claim 6 or 7, **characterized in that** said seed layer has a surface roughness of 0.3 nm to 1.5 nm.

9. The magneto-optical recording medium as set forth in claim 6 or 7, **characterized by** comprising a plurality of said seed layers formed, wherein the seed layer formed near the recording layer side has a greater surface tension than a surface tension of the seed layer formed near the reflecting layer side.

10. The magneto-optical recording medium as set forth in claim 6 or 7, **characterized by** comprising a recording assist layer with perpendicular magnetic anisotropy formed between said reflecting layer and said seed layer, wherein said recording assist layer cancels a demagnetizing field caused by magnetization of said recording layer.

11. The magneto-optical recording medium as set forth in claim 10, **characterized in that**, when said recording layer is a transition-metal magnetization dominant film, said recording assist layer is a rare-earth magnetization dominant film.

12. The magneto-optical recording medium as set forth in claim 10, **characterized in that**, when said recording layer is a rare-earth magnetization dominant film, said recording assist layer is a transition-metal magnetization dominant film.

13. The magneto-optical recording medium as set forth in claim 10, **characterized in that**, when said recording layer and said recording assist layer are transition-metal magnetization dominant films, a Curie temperature of said recording assist layer is higher than a Curie temperature of said recording layer.

14. The magneto-optical recording medium as set forth in claim 10, **characterized in that**, when said recording layer and said recording assist layer are rare-earth magnetization dominant films, a Curie temperature of said recording assist layer is higher than a Curie temperature of said recording layer.

15. An information recording/reading-out apparatus for performing recording/readout of information using an optical recording medium of claim 1 or 2, or a magneto-optical recording medium of claim 6 or 7.

16. A method for recording/reading-out information using a magnetic recording medium comprising a thermal diffusion layer and a recording layer with perpendicular magnetic anisotropy formed in this order on a substrate, and a seed layer having surface irregularities formed between said thermal diffusion layer and said recording layer, **characterized in that**
information is magneto-optically recorded by applying light and a magnetic field to said magnetic recording medium, and information is magnetically read-out by detecting magnetic flux from said recording layer side.

17. A magnetic recording apparatus **characterized by** comprising:
a magnetic recording medium including a thermal diffusion layer and a recording layer with perpendicular magnetic anisotropy formed in this order on a substrate and a seed layer having surface irregularities formed between said thermal diffusion layer and said recording layer;
a magneto-optical recording unit for performing recording of information by applying light and a magnetic field to said magnetic recording medium; and
a magnetic reading-out unit for performing readout of information by detecting magnetic flux from said recording layer side.

18. The magnetic recording apparatus as set forth in claim 17, **characterized by** comprising one slider on which a device for heating said magnetic recording medium by applying the light, a device for applying the magnetic field, and a device for detecting the magnetic flux are mounted.
